# EUROPEAN PATENT SPECIFICATION

(11) **EP 4 331 886 B1**
(45) Date of publication and mention of the grant of the patent: **26.11.2025**
(21) Application number: 22874536.0
(22) Date of filing: 31.08.2022
(51) Int. Cl.: B60K 11/04, B60H 1/06, B60H 1/14, B60H 1/00, B60H 1/32, H01M 10/613, H01M 10/615, H01M 10/663

(54) **THERMAL MANAGEMENT SYSTEM AND VEHICLE HAVING SAME**
WÄRMEVERWALTUNGSSYSTEM UND FAHRZEUG DAMIT
SYSTÈME DE GESTION THERMIQUE ET VÉHICULE LE COMPRENANT

(30) Priority: 30.09.2021 CN 202111161075
(43) Date of publication of application: 06.03.2024
(73) Proprietor: BYD Company Limited, Shenzhen, Guangdong 518118 (CN)
(72) Inventor: YANG, Dongsheng, Shenzhen, Guangdong 518118 (CN); BAI, Yunhui, Shenzhen, Guangdong 518118 (CN); ZHANG, Junyan, Shenzhen, Guangdong 518118 (CN); ZHAO, Shangzhong, Shenzhen, Guangdong 518118 (CN); TANG, Yifeng, Shenzhen, Guangdong 518118 (CN)
(74) Representative: Dehns Germany Partnerschaft mbB
(86) International application number: PCT/CN2022/116347
(87) International publication number: WO 2023/051145

(56) References cited:
- CN-A- 110 525 169
- CN-A- 110 949 182
- CN-A- 111 231 620
- CN-A- 112 339 527
- KR-A- 20190 016 710
- US-A1- 2012 085 510
- US-A1- 2019 070 924
- US-A1- 2020 079 177
- US-A1- 2020 338 956

## Description

### FIELD

The present invention relates to the field of vehicle technologies, and in particular, to a thermal management system and a vehicle having the same.

### BACKGROUND

In the related art, a thermal management system in a vehicle may cool an in-vehicle environment through a heat pump module, and cool a battery and an electric assembly through the heat pump module. However, in the related art, the thermal management system cannot fully utilize excess heat of an electric assembly waterway and a battery waterway, and cannot implement various working conditions that the battery and the electric assembly are independently cooled or heated, the battery and the electric assembly are jointly cooled or heated when connected in series, and the battery is heated by using excess heat of the electric assembly when the battery and the electric assembly are connected in series. As a result, an entire integration level is low and power consumption of the vehicle is high.

US 2019/070924 Al discloses a vehicle thermal management system, which includes a vehicle heat pump system, a battery system coolant loop, a drive train coolant loop, and control electronics. The vehicle heat pump system includes a compressor, a cabin condenser, a cabin evaporator, a cabin blower, and a chiller. The battery system coolant loop is in thermal communication with a battery system and with the chiller and selectively in thermal communication with the drive train coolant loop. The control electronics control the components of the vehicle thermal management system to heat the cabin, cool the cabin, heat the battery system, cool the battery system, and cool the drive train.

### SUMMARY

The present invention aims to resolve at least one of technical problems existing in the related art. Based on this, one objective of the present invention is to provide a thermal management system. The thermal management system can fully utilize excess heat of a battery and an electric assembly, and can heat or cool the battery and the electric assembly in various working conditions, so that the thermal management system has advantages such as high energy utilization and a high integration level.

The present invention further provides a vehicle including the thermal management system.

In order to realize the above objective, according to a first aspect of the present invention, an embodiment provides a thermal management system, including: a heat pump module; a battery waterway; a heat exchange waterway; a heat dissipator waterway; an electric assembly waterway; a first heat exchanger, where the first heat exchanger includes a first heat exchange path and a second heat exchange path, the first heat exchange path is in communication with the heat pump module, and the second heat exchange path is in communication with the heat exchange waterway; and a control valve group, where the control valve group is switchable among a first state, a second state, and a third state, and the control valve group is respectively in communication with the battery waterway, the heat exchange waterway, the heat dissipator waterway, and the electric assembly waterway. When the control valve group is in the first state, the electric assembly waterway is in communication with the heat dissipator waterway in series, or the battery waterway is in communication with the heat exchange waterway in series, or the electric assembly waterway is in communication with the heat dissipator waterway in series and the battery waterway is in communication with the heat exchange waterway in series, when the control valve group is in the second state, the electric assembly waterway is connected to the heat exchange waterway in series, or the battery waterway is in communication with the heat dissipator waterway in series, or the electric assembly waterway is in communication with the heat exchange waterway in series and the battery waterway is in communication with the heat dissipator waterway in series; and when the control valve group is in the third state, the battery waterway, the heat exchange waterway, the heat dissipator waterway, and the electric assembly waterway are in communication with each other in series.

According to the thermal management system in the embodiments of the present invention, the excess heat of the battery and the electric assembly can be fully utilized, and the heat pump module can perform heating, so that the thermal management system has advantages such as high energy utilization and a high integration level.

According to some embodiments of the present invention, the control valve group includes: a first four-way valve, where the first four-way valve includes a first valve port, a second valve port, a third valve port, and a fourth valve port, the first valve port is connected to one end of the heat dissipator waterway, the second valve port is connected to one end of the battery waterway, the third valve port is connected to one end of the heat exchange waterway, and the fourth valve port is connected to one end of the electric assembly waterway; and a second four-way valve, where the second four-way valve includes a fifth valve port, a sixth valve port, a seventh valve port, and an eighth valve port, the fifth valve port is connected to the other end of the electric assembly waterway, the sixth valve port is connected to the other end of the heat dissipator waterway, the seventh valve port is connected to the other end of the battery waterway, and the eighth valve port is connected to the other end of the heat exchange waterway.

When the control valve group is in the first state, the first valve port is in communication with the fourth valve port, the second valve port is in communication with the third valve port, the fifth valve port is in communication with the sixth valve port, and the seventh valve port is in communication with the eighth valve port;
when the control valve group is in the second state, the first valve port is in communication with the second valve port, the third valve port is in communication with the fourth valve port, the fifth valve port is in communication with the eighth valve port, and the sixth valve port is in communication with the seventh valve port; and
when the control valve group is in the third state, the first valve port is in communication with the second valve port, the third valve port is in communication with the fourth valve port, the fifth valve port is in communication with the sixth valve port, and the seventh valve port is in communication with the eighth valve port; or the first valve port is in communication with the fourth valve port, the second valve port is in communication with the third valve port, the fifth valve port is in communication with the eighth valve port, and the sixth valve port is in communication with the seventh valve port.

According to some embodiments of the present invention, the electric assembly waterway includes: an electrically controlled component; an intercooler, where the intercooler is connected to the electrically controlled component in parallel; and a motor, where the motor is connected to the electrically controlled component in series and the motor is located downstream of the electrically controlled component, or the motor is connected to the intercooler in series and the motor is located downstream of the intercooler.

According to some embodiments of the present invention, the heat dissipator waterway includes: a heat dissipator and a first direct connection branch, where the heat dissipator is connected to the first direct connection branch in parallel, and a coolant in the heat dissipator waterway may selectively flow through the heat dissipator or the first direct connection branch.

According to some embodiments of the present invention, the battery waterway includes: a battery and a second direct connection branch, where the battery is connected to the second direct connection branch in parallel, and a coolant in the battery waterway may selectively flow through the battery or the second direct connection branch.

According to some embodiments of the present invention, the battery waterway includes: a heater, where the heater is connected to the battery.

According to some embodiments of the present invention, the heater is a PTC or an exhaust gas heat exchanger.

According to the present invention, the heat pump module includes: a compressor; at least one in-cabin condenser, where one end of the in-cabin condenser is connected to one end of the compressor; an out-cabin heat exchanger, where one end of the out-cabin heat exchanger is selectably connected to or disconnected from the other end of the in-cabin condenser through a refrigerating front branch, and the other end of the out-cabin heat exchanger is selectably connected to or disconnected from the other end of the in-cabin condenser through a heating front branch; at least one in-cabin evaporator, where one end of the in-cabin evaporator is selectably connected to or disconnected from the other end of the out-cabin heat exchanger through a refrigerating rear branch; and a gas-liquid separator, where the gas-liquid separator is connected between the other end of the compressor and the other end of the in-cabin evaporator, and the end of the out-cabin heat exchanger is selectably connected to or disconnected from the other end of the compressor through a heating rear branch and the gas-liquid separator. One end of the first heat exchange path is selectably connected to or disconnected from the other end of the in-cabin condenser through the heating front branch, the end of the first heat exchange path is selectably connected to or disconnected from the other end of the out-cabin heat exchanger through the refrigerating rear branch, and the other end of the first heat exchange path is connected to the other end of the compressor through the gas-liquid separator.

According to the present invention, there are multiple in-cabin condensers, the multiple in-cabin condensers include a first in-cabin condenser and a second in-cabin condenser, one end of the first in-cabin condenser is connected to the end of the compressor, the other end of the first in-cabin condenser is connected to the refrigerating front branch, one end of the second in-cabin condenser is connected to the end of the compressor through a first two-way valve, and the other end of the second in-cabin condenser is connected to the refrigerating front branch.

According to some embodiments of the present invention, there are multiple in-cabin evaporators, the multiple in-cabin evaporators include a first in-cabin evaporator and a second in-cabin evaporator, one end of the first in-cabin evaporator is connected to the refrigerating rear branch through one expansion valve, the other end of the first in-cabin evaporator is connected to the gas-liquid separator, one end of the second in-cabin evaporator is connected to the refrigerating rear branch through another expansion valve, and the other end of the second in-cabin evaporator is connected to the gas-liquid separator.

According to some embodiments of the present invention, a second two-way valve is arranged on the refrigerating front branch; a first one-way valve and a third two-way valve are arranged on the refrigerating rear branch, the first one-way valve allows a refrigerant of the out-cabin heat exchanger to flow to the in-cabin evaporator, and the first one-way valve prevents a refrigerant of the in-cabin evaporator from flowing to the out-cabin heat exchanger; a fourth two-way valve, a first electromagnetic expansion valve, and a second one-way valve are arranged on the heating front branch, the second one-way valve allows the refrigerant of the in-cabin evaporator to flow to the out-cabin heat exchanger, and the second one-way valve prevents the refrigerant of the out-cabin heat exchanger from flowing to the in-cabin evaporator; a fifth two-way valve is arranged on the heating rear branch; and the end of the first heat exchange path is connected to the heating front branch and the refrigerating rear branch through a second electromagnetic expansion valve.

According to some embodiments of the present invention, the heating front branch includes: a first segment, where one end of the first segment is connected to the end of the in-cabin condenser, and the other end of the first segment is respectively connected to the first one-way valve, the third two-way valve, and the second electromagnetic expansion valve; and a second segment, where one end of the second segment is connected to the other end of the first segment, and the other end of the second segment is connected to the other end of the out-cabin heat exchanger. The fourth two-way valve is arranged on the first segment, and the first electromagnetic expansion valve and the second one-way valve are arranged on the second segment.

According to some embodiments of the present invention, the gas-liquid separator includes: a first flow path, where one end of the first path is connected to the first one-way valve and the end of the first segment, and the other end of the first flow path is connected to the third two-way valve, the second electromagnetic expansion valve, and the end of the second segment; and a second flow path, where one end of the second flow path is connected to the other end of the in-cabin evaporator, the heating rear branch, and the other end of the first heat exchange path, and the other end of the second flow path is connected to the other end of the compressor.

According to some embodiments of the present invention, the thermal management system further includes: an engine waterway; and a second heat exchanger, where the second heat exchanger includes a third heat exchange path and a fourth heat exchange path, the third heat exchange path is connected to the heat exchange waterway, and the fourth heat exchange path is connected to the engine waterway.

According to some embodiments of the present invention, the engine waterway includes: an engine; and a sixth two-way valve, where the sixth two-way valve is connected to the engine in series.

According to some embodiments of the present invention, the engine waterway includes: a warm air system, where the warm air system is connected to the engine in series.

According to a second aspect of the present invention, an embodiment provides a vehicle, including the thermal management system described in the embodiments according to the first aspect of the present invention.

According to the second aspect of the present invention, the vehicle in the embodiment can, by utilizing the thermal management system described in the embodiments according to the first aspect of the present invention, fully utilize the excess heat of the battery and the electric assembly, and can heat or cool the battery and the electric assembly in various working conditions, so that the vehicle has advantages such as high energy utilization and a high integration level.

Other aspects and advantages of the present invention will be given in the following description, some of which will become apparent from the following description or may be learned from practices of the present invention.

### BRIEF DESCRIPTION OF THE DRAWINGS

The foregoing and/or additional aspects and advantages of the present invention become apparent and easily understood in the description of the embodiments with reference to the following accompanying drawings.
FIG. 1 is a schematic structural diagram of a control valve group of an air conditioner in a first state according to an embodiment of the present invention;
FIG. 2 is a schematic structural diagram of a control valve group of an air conditioner in a second state according to an embodiment of the present invention;
FIG. 3 is a schematic structural diagram of a control valve group of an air conditioner in a third state according to an embodiment of the present invention;
FIG. 4 is another schematic structural diagram of a control valve group of an air conditioner in a third state according to an embodiment of the present invention;
FIG. 5 is a schematic structural diagram of a control valve group of an air conditioner in a first state according to another embodiment of the present invention;
FIG. 6 is a schematic structural diagram of a control valve group of an air conditioner in a second state according to another embodiment of the present invention;
FIG. 7 is a schematic structural diagram of a control valve group of an air conditioner in a third state according to another embodiment of the present invention;
FIG. 8 is another schematic structural diagram of a control valve group of an air conditioner in a third state according to another embodiment of the present invention;
FIG. 9 is a schematic structural diagram of a heat pump module of an air conditioner during a refrigeration cycle according to an embodiment of the present invention;
FIG. 10 is a schematic structural diagram of a heat pump module of an air conditioner during a heating cycle according to an embodiment of the present invention;
FIG. 11 is a schematic structural diagram of a heat pump module of an air conditioner during a heating cycle according to another embodiment of the present invention; and
FIG. 12 is a schematic diagram of a vehicle according to an embodiment of the present invention.

### DETAILED DESCRIPTION

The following describes embodiments of the present invention in detail. Examples of the embodiments are shown in the accompanying drawings, and same or similar reference numerals in all the accompanying drawings indicate same or similar elements or elements having same or similar functions. The embodiments that are described below with reference to the accompanying drawings are exemplary, and are only intended to describe the present invention and cannot be construed as a limitation on the present invention.

In the description of the present invention, it should be understood that orientation or position relationships indicated by the terms such as "center", "longitudinal", "lateral", "length", "width", "thickness", "upper", "lower", "front", "rear", "left", "right", "vertical", "horizontal", "top", "bottom", "inner", "outer", "axial", "radial", and "circumferential" are based on orientation or position relationships shown in the accompanying drawings, and are used only for describing the present invention and simplifying the description, rather than indicating or implying that the mentioned apparatus or element must have a particular orientation or must be constructed and operated in a particular orientation. Therefore, such terms should not be construed as a limitation on the present invention.

In the description of the present invention, a "first feature" or a "second feature" may include one or more features.

In the description of the present invention, "multiple" means two or more than two, and "several" means one or more.

A thermal management system 1 according to the embodiments of the present invention is first described with reference to the accompanying drawings.

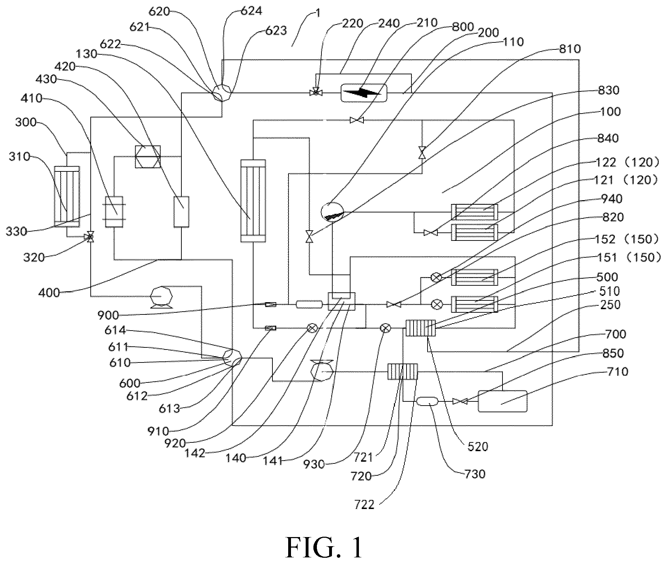

As shown in FIG. 1 to FIG. 8, the thermal management system 1 according to the embodiments of the present invention includes a heat pump module 100, a battery waterway 200, a heat exchange waterway 250, a heat dissipator waterway 300, an electric assembly waterway 400, a first heat exchanger 500, and a control valve group 600.

The first heat exchanger 500 includes a first heat exchange path 510 and a second heat exchange path 520, the first heat exchange path 510 is in communication with the heat pump module 100, the second heat exchange path 520 is in communication with the heat exchange waterway 250, and the control valve group 600 is switchable among a first state, a second state, and a third state and is respectively in communication with the battery waterway 200, the heat exchange waterway 250, the heat dissipator waterway 300, and the electric assembly waterway 400.

For example, the first heat exchanger 500 may be a plate heat exchanger, and a refrigerant of the heat pump module 100 and a coolant of the heat exchange waterway 250 perform heat exchange through the first heat exchanger 500.

**It** should be noted that, a pump may be arranged in the heat dissipator waterway 300 and the heat exchange waterway 250, or a pump may be arranged in the electric assembly waterway 400 and the battery waterway 200, or a pump may be arranged in the battery waterway 200, the heat exchange waterway 250, the heat dissipator waterway 300, and the electric assembly waterway 400. In addition, coolants in the battery waterway 200, the heat exchange waterway 250, the heat dissipator waterway 300, and the electric assembly waterway 400 may be the same.

When the control valve group 600 is in the first state, the electric assembly waterway 400 is connected to the heat dissipator waterway 300 in series, and/or the battery waterway 200 is in communication with the heat exchange waterway 250 in series. That is, when the control valve group 600 is in the first state, the electric assembly waterway 400 is connected to the heat dissipator waterway 300 in series, or the battery waterway 200 is in communication with the heat exchange waterway 250 in series, or the electric assembly waterway 400 is connected to the heat dissipator waterway 300 in series and the battery waterway 200 is in communication with the heat exchange waterway 250 in series. When the control valve group 600 is in the second state, the electric assembly waterway 400 is connected to the heat exchange waterway 250 in series, and/or the battery waterway 200 is in communication with the heat dissipator waterway 300 in series. That is, when the control valve group 600 is in the second state, the electric assembly waterway 400 is connected to the heat exchange waterway 250 in series, or the battery waterway 200 is in communication with the heat dissipator waterway 300 in series, or the electric assembly waterway 400 is connected to the heat exchange waterway 250 in series and the battery waterway 200 is in communication with the heat dissipator waterway 300 in series. When the control valve group 600 is in the third state, the battery waterway 200, the heat exchange waterway 250, the heat dissipator waterway 300, and the electric assembly waterway 400 are in communication with each other in series.

For example, the refrigerant of the heat pump module 100 may be R-410A, R-407C, and R-134a, and the coolants of the battery waterway 200, the heat exchange waterway 250, the heat dissipator waterway 300, and the electric assembly waterway 400 may be mixed liquid of water and ethylene glycol.

In the thermal management system 1 according to the embodiments of the present invention, the first heat exchange path 510 and the second heat exchange path 520 are provided in the first heat exchanger 500, the first heat exchange path 510 is connected to the heat pump module 100, the second heat exchange path 520 is connected to the heat exchange waterway 250, and the first heat exchange path 510 is not in communication with the second heat exchange path 520, so that the refrigerant of the heat pump module 100 may flow through the first heat exchange path 510, the coolant of the heat exchange waterway 250 may flow through the second heat exchange path 520, and the refrigerant of the heat pump module 100 and the coolant of the heat exchange waterway 250 may perform heat exchange through the first heat exchanger 500.

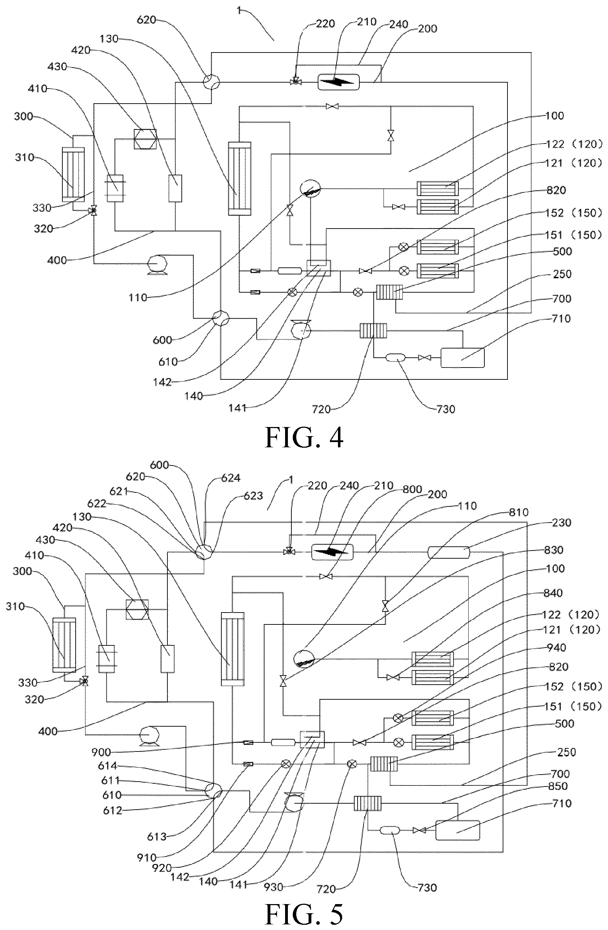

As shown in FIG. 1 and FIG. 5, when the control valve group 600 is in the first state, the electric assembly waterway 400 is connected to the heat dissipator waterway 300 in series, or the battery waterway 200 is connected to the heat exchange waterway 250 in series, or the electric assembly waterway 400 is connected to the heat dissipator waterway 300 in series and the battery waterway 200 is connected to the heat exchange waterway 250 in series. In other words, the electric assembly waterway 400 and the heat dissipator waterway 300 form an independent waterway. In this way, the coolant may circularly flow in the electric assembly waterway 400 and the heat dissipator waterway 300. In addition, a temperature is decreased when the coolant flows through the heat dissipator waterway 300, and the coolant flowing out of the heat dissipator waterway 300 may cool the electric assembly waterway 400, to ensure normal working of an electric assembly. In addition, the battery waterway 200 and the heat exchange waterway 250 form an independent waterway, and the coolant may circularly flow in the battery waterway 200 and the heat exchange waterway 250. During refrigeration by the heat pump module 100, a temperature of the coolant of the heat exchange waterway 250 is decreased by the refrigerant of the heat pump module 100, that is, a temperature of the coolant of the battery waterway 200 is decreased. In this case, the coolant may dissipate heat for and cool a battery 210, to prevent a temperature of the battery 210 from being too high, thereby ensuring normal working of the battery 210. During heating by the heat pump module 100, the heat exchange waterway 250 may absorb excess heat of the battery 210 through the battery waterway 200, and then supply heat to the heat pump module 100 through the first heat exchanger 500, to reduce heating difficulty of the heat pump module 100. Therefore, the excess heat of the battery 210 is fully utilized, energy utilization is improved, and energy consumption is reduced.

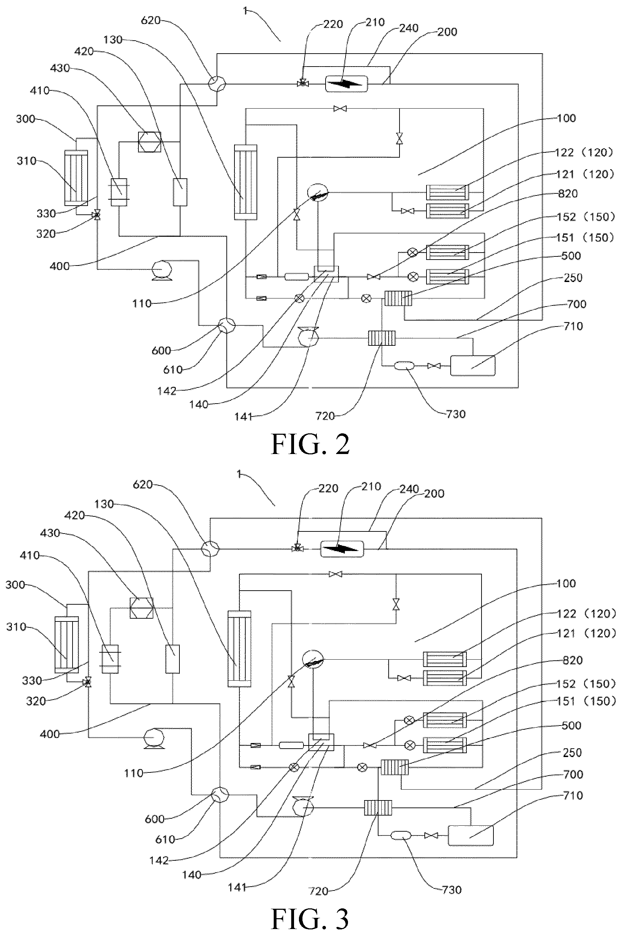

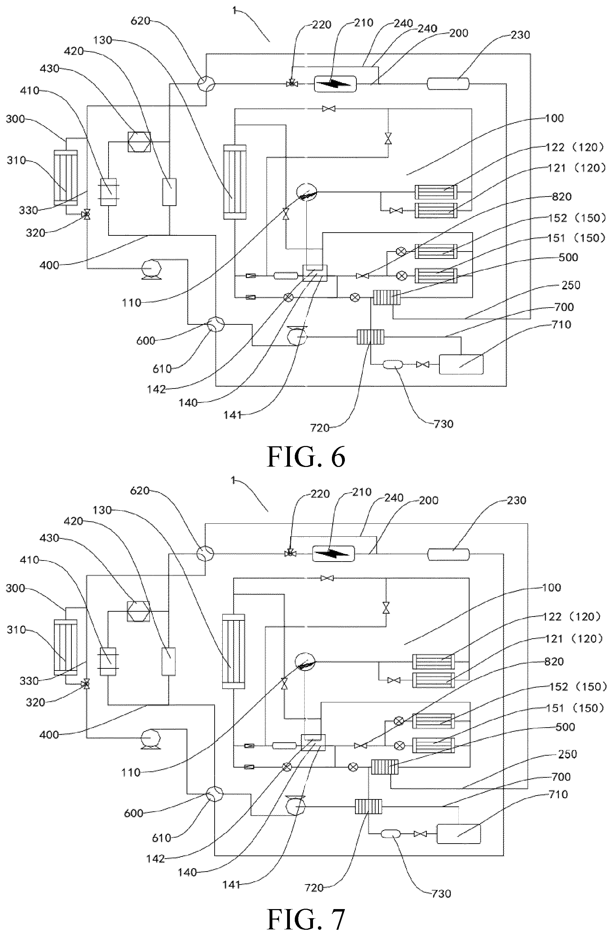

As shown in FIG. 2 and FIG. 6, when the control valve group 600 is in the second state, the electric assembly waterway 400 is connected to the heat exchange waterway 250 in series, or the battery waterway 200 is connected to the heat dissipator waterway 300 in series, or the electric assembly waterway 400 is connected to the heat exchange waterway 250 in series and the battery waterway 200 is connected to the heat dissipator waterway 300 in series. In other words, the electric assembly waterway 400 and the heat exchange waterway 250 form an independent waterway, and the coolant may circularly flow in the electric assembly waterway 400 and the heat exchange waterway 250. During refrigeration by the heat pump module 100, the temperature of the coolant of the heat exchange waterway 250 is decreased by the refrigerant of the heat pump module 100, that is, a temperature of the coolant of the electric assembly waterway 400 is decreased. In this case, the coolant may dissipate heat for and cool the electric assembly waterway 400, to prevent a temperature of the electric assembly from being too high, thereby ensuring normal working of the electric assembly. During heating by the heat pump module 100, the heat exchange waterway 250 may absorb excess heat of the electric assembly through the electric assembly waterway 400, and then supply heat to the heat pump module 100 through the first heat exchanger 500, to reduce heating difficulty of the heat pump module 100. Therefore, the excess heat of the electric assembly is fully utilized, energy utilization is improved, and energy consumption is reduced. In addition, the battery waterway 200 and the heat dissipator waterway 300 form an independent waterway, the coolant may circularly flow in the battery waterway 200 and the heat dissipator waterway 300. In this way, a temperature is decreased when the coolant flows through the heat dissipator waterway 300, and the coolant flowing out of the heat dissipator waterway 300 may dissipate heat for and cool the battery waterway 200, to ensure normal working of the battery 210.

As shown in FIG. 3 and FIG. 4, when the control valve group 600 is in the third state, the battery waterway 200, the heat exchange waterway 250, the heat dissipator waterway 300, and the electric assembly waterway 400 are connected in series. In other words, the battery waterway 200, the heat exchange waterway 250, the heat dissipator waterway 300, and the electric assembly waterway 400 form a whole waterway, and the coolant circularly flows in the battery waterway 200, the heat exchange waterway 250, the heat dissipator waterway 300, and the electric assembly waterway 400.

During refrigeration by the heat pump module 100, the temperature of the coolant of the heat exchange waterway 250 is decreased by the refrigerant of the heat pump module 100, that is, the temperature of the coolant of the electric assembly waterway 400 and the temperature of the coolant of the battery waterway 200 are decreased. The coolant may dissipate heat for and cool the electric assembly waterway 400 and the battery waterway 200, to prevent the temperature of the electric assembly and the temperature of the battery 210 from being too high, thereby ensuring normal working of the battery 210 and the electric assembly.

During heating by the heat pump module 100, the heat exchange waterway 250 may absorb the excess heat of the electric assembly through the electric assembly waterway 400 and absorb the excess heat of the battery 210 through the battery waterway 200, and then supply heat to the heat pump module 100 through the first heat exchanger 500, to reduce heating difficulty of the heat pump module 100. Therefore, the excess heat of the electric assembly and the battery 210 is fully utilized, energy utilization is improved, and energy consumption is reduced.

In addition, when a vehicle 2 is started, the excess heat of the electric assembly may be independently utilized to heat the battery 210, to reduce a start duration of the vehicle 2.

The control valve group 600 is switched among the first state, the second state, and the third state, to adjust communication states of the multiple waterways. This adjustment manner is simple and convenient, arrangement of pipes may be further reduced, and a whole volume of the thermal management system 1 is further reduced, so that an integration level is higher.

In addition, through arrangement of the control valve group 600 and the first heat exchanger 500, the heat pump module 100 may implement two functions: refrigeration and heating, and the excess heat of the battery 210 and the electric assembly is fully utilized, so that energy consumption is reduced, performance of the vehicle 2 in different working conditions is optimized, a service life of the vehicle 2 can be prolonged, and use costs can be reduced.

In this way, the thermal management system 1 according to the embodiments of the present invention can fully utilize the excess heat of the battery 210 and the electric assembly, and can heat the battery 210 and the electric assembly in various working conditions, so that the thermal management system has advantages such as high energy utilization and a high integration level.

In some specific embodiments of the present invention, as shown in FIG. 1 to FIG. 8, the control valve group 600 includes a first four-way valve 610 and a second four-way valve 620.

As shown in FIG. 1 and FIG. 5, the first four-way valve 610 includes a first valve port 611, a second valve port 612, a third valve port 613, and a fourth valve port 614, the first valve port 611 is connected to one end of the heat dissipator waterway 300, the second valve port 612 is connected to one end of the battery waterway 200, the third valve port 613 is connected to one end of the heat exchange waterway 250, and the fourth valve port 614 is connected to one end of the electric assembly waterway 400.

The second four-way valve 620 includes a fifth valve port 621, a sixth valve port 622, a seventh valve port 623, and an eighth valve port 624, the fifth valve port 621 is connected to the other end of the electric assembly waterway 400, the sixth valve port 622 is connected to the other end of the heat dissipator waterway 300, the seventh valve port 623 is connected to the other end of the battery waterway 200, and the eighth valve port 624 is connected to the other end of the heat exchange waterway 250. Specifically, as shown in FIG. 1 and FIG. 5, when the control valve group 600 is in the first state, the first valve port 611 is in communication with the fourth valve port 614, the second valve port 612 is in communication with the third valve port 613, the fifth valve port 621 is in communication with the sixth valve port 622, and the seventh valve port 623 is in communication with the eighth valve port 624. In this case, the electric assembly waterway 400 is connected to the heat dissipator waterway 300 in series and the battery waterway 200 is in communication with the heat exchange waterway 250 in series.

The coolant of the heat exchange waterway 250 flows through the pump, the second valve port 612 and the third valve port 613 of the first four-way valve 610, and the battery 210, then flows to the second heat exchange path 520 of the first heat exchanger 500 through the seventh valve port 623 and the eighth valve port 624 of the second four-way valve 620, and finally flows back to the pump. The flowing process of the coolant is performed sequentially and circularly. The heat pump module 100 and the heat exchange waterway 250 perform heat exchange through the second heat exchange path 520 and the first heat exchange path 510, and during refrigeration by the heat pump module 100, the heat pump module 100 indirectly cools the battery 210; and during heating by the heat pump module 100, the heat pump module 100 may absorb the excess heat of the battery 210, to heat a passenger cabin.

The coolant of the heat dissipator waterway 300 flows into the electric assembly waterway 400 through the first valve port 611 and the fourth valve port 614 of the first four-way valve 610, and then flows back to the heat dissipator waterway 300 through the sixth valve port 622 and the fifth valve port 621 of the second four-way valve 620. The flowing process of the coolant is performed sequentially and circularly. In this case, the heat dissipator waterway 300 dissipates heat for the electric assembly.

As shown in FIG. 2 and FIG. 6, when the control valve group 600 is in the second state, the first valve port 611 is in communication with the second valve port 612, the third valve port 613 is in communication with the fourth valve port 614, the fifth valve port 621 is in communication with the eighth valve port 624, and the sixth valve port 622 is in communication with the seventh valve port 623. In this case, the electric assembly waterway 400 is connected to the heat exchange waterway 250 in series and the battery waterway 200 is in communication with the heat dissipator waterway 300 in series.

The coolant of the heat dissipator waterway 300 flows into the battery waterway 200 through the first valve port 611 and the second valve port 612 of the first four-way valve 610, and then flows back to the heat dissipator waterway 300 through the seventh valve port 623 and the sixth valve port 622 of the second four-way valve 620. The flowing process of the coolant is performed sequentially and circularly. When charging is performed in a high-temperature environment, the heat dissipator waterway 300 may independently dissipate heat for the battery 210, so that the heat dissipation efficiency of the battery 210 can be improved, the temperature of the battery 210 can be prevented from being too high, and a service life of the battery 210 can be prolonged.

During heating by the heat pump module 100, the coolant of the electric assembly waterway 400 flows through the heat exchange waterway 250 and the first heat exchange path 510 of the first heat exchanger 500 through the fourth valve port 614 and the third valve port 613 of the first four-way valve 610, and then flows back to the electric assembly waterway 400 through the eighth valve port 624 and the fifth valve port 621 of the second four-way valve 620. The flowing process of the coolant is performed sequentially and circularly. In this case, the heat pump module 100 can absorb the excess heat of the electric assembly through the first heat exchanger 500, to heat the passenger cabin.

As shown in FIG. 3, FIG. 4, FIG. 5, and FIG. 6, when the control valve group 600 is in the third state, the first valve port 611 is in communication with the second valve port 612, the third valve port 613 is in communication with the fourth valve port 614, the fifth valve port 621 is in communication with the sixth valve port 622, and the seventh valve port 623 is in communication with the eighth valve port 624; or the first valve port 611 is in communication with the fourth valve port 614, the second valve port 612 is in communication with the third valve port 613, the fifth valve port 621 is in communication with the eighth valve port 624, and the sixth valve port 622 is in communication with the seventh valve port 623. In this case, the battery waterway 200, the heat exchange waterway 250, the heat dissipator waterway 300, and the electric assembly waterway 400 are connected to each other in series.

For example, the coolant of the battery waterway 200 flows to the heat dissipator waterway 300 through the second valve port 612 and the first valve port 611 of the first four-way valve 610, then flows to the electric assembly waterway 400 through the fifth valve port 621 and the sixth valve port 622 of the second four-way valve 620, further flows to the heat exchange waterway 250 through the fourth valve port 614 and the third valve port 613 of the first four-way valve 610, and finally flows back to the battery waterway 200 through the eighth valve port 624 and the seventh valve port 623 of the second four-way valve 620. The flowing process of the coolant is performed sequentially and circularly. In this case, the excess heat of the electric assembly may be utilized to independently heat the battery 210, thereby preventing the temperature of the battery 210 from being too low when an environmental temperature is low, and ensuring the working efficiency of the battery 210.

It should be noted that, the control valve group 600 may alternatively be a combined value of another type, for example, a combination of a five-way valve and a three-way valve. In addition, implementation of the foregoing coupling relationship through another combined valve is not limited.

In some specific embodiments of the present invention, as shown in FIG. 1 to FIG. 8, the electric assembly waterway 400 includes an electrically controlled component 410, an intercooler 420, and a motor 430. The motor 430 is located downstream of the electrically controlled component 410 and the intercooler 420, the intercooler 420 and the electrically controlled component 410 both are control devices, and high-temperature resistance of the intercooler 420 and high-temperature resistance of the electrically controlled component 410 are lower than high-temperature resistance of the motor 430. Therefore, by arranging the motor 430 downstream of the electrically controlled component 410 and the intercooler 420, the coolant may first flow through the intercooler 420 and the electrically controlled component 410, and then flow through the motor 430 after the intercooler 420 and the electrically controlled component 410 are refrigerated and cooled. In this way, cooling effects of the intercooler 420 and the electrically controlled component 410 are improved, the intercooler 420 and the electrically controlled component 410 are prevented from being damaged due to an excessively high temperature, and service lives of the intercooler 420 and the electrically controlled component 410 are prolonged.

In addition, the intercooler 420 is connected to the electrically controlled component 410 in parallel, the motor 430 is connected to the electrically controlled component 410 in series, or the motor 430 is connected to the intercooler 420 in series.

It may be understood that, the high-temperature resistance of the intercooler 420 and the high-temperature resistance of the electrically controlled component 410 are also different, and usages of the two elements are different. As a result, working temperatures of the intercooler 420 and the electrically controlled component 410 may be different. Temperature control may be performed on the intercooler 420 and the electrically controlled component 410 respectively by arranging the two components in parallel, so that temperature control is more accurate, and the intercooler 420 and the electrically controlled component 410 are more effectively protected.

It should be noted that, the motor 430, the electrically controlled component 410, and the intercooler 420 are in communication with each other, the communication refers to that flowing pipes of coolants of the components are in communication with each other. In other embodiments of the present invention, communication between mentioned components also refers to that flowing pipes of corresponding coolants of the mentioned components are in communication with each other, so that heat exchange among multiple components may be implemented by using the coolants.

In some specific embodiments of the present invention, the heat dissipator waterway 300 includes a heat dissipator 310 and a first direct connection branch 330, where the heat dissipator 310 is connected to the first direct connection branch 330 in parallel, and the coolant in the heat dissipator waterway 300 may selectively flow through the heat dissipator 310 or the first direct connection branch 330.

As shown in FIG. 1 to FIG. 8, a first three-way valve 320 is arranged on the first direct connection branch 330, and the first three-way valve 320 is connected to the heat dissipator 310 and is configured to control whether liquid in the heat dissipator waterway 300 flows through the heat dissipator 310.

For example, the first three-way valve 320 may include one water inlet and two water outlets. The first three-way valve 320 may be arranged between the heat dissipator 310 and the first valve port 611 of the first four-way valve 610, the water inlet of the first three-way valve 320 is connected to the first valve port 611, one water outlet of the first three-way valve 320 is connected to one end of the heat dissipator 310, and the other water outlet of the first three-way valve 320 is directly connected to the sixth valve port 622 of the second four-way valve 620.

When the heat dissipator 310 does not need to work, for example, when the control valve group 600 is in the third state, that is, when excess heat of the motor 430 and the electrically controlled component 410 is independently utilized to heat the battery 210. In this case, the water outlet of the first three-way valve 320 connected to the heat dissipator 310 may be closed, and the water outlet of the first three-way valve 320 connected to the sixth valve port 622 may be opened, so that the coolant in the heat dissipator waterway 300 does not flow through the heat dissipator 310, the excess heat of the motor 430 and the electrically controlled component 410 may not be dissipated by the heat dissipator 310, and the excess heat of the motor 430 and the electrically controlled component 410 is more fully utilized to heat the battery 210, thereby further improving energy utilization.

**In** some specific embodiments of the present invention, the battery waterway 200 includes the battery 210 and a second direct connection branch 240, where the battery 210 is connected to the second direct connection branch 240 in parallel, and the coolant in the battery waterway 200 may selectively flow through the battery 210 or the second direct connection branch 240.

As shown in FIG. 1 to FIG. 8, a second three-way valve 220 is arranged on the second direct connection branch 240, and the second three-way valve 220 is connected to the battery 210 and is configured to control whether liquid in the battery waterway 200 flows through the battery 210.

For example, the second three-way valve 220 may also include one water inlet and two water outlets. The second three-way valve 220 may be arranged between the battery 210 and the seventh valve port 623 of the second four-way valve 620, the water inlet of the second three-way valve 220 is connected to the seventh valve port 623, one water outlet of the second three-way valve 220 is connected to one end of the battery 210, and the other water outlet of the second three-way valve 220 is connected to the second valve port 612 of the first four-way valve 610.

When the battery 210 does not need to be heated, for example, when the control valve group 600 is in the third state, that is, when only the electric assembly needs to be heated or cooled, the water outlet of the second three-way valve 220 connected to the battery 210 may be closed, and the water outlet of the second three-way valve 220 connected to the second valve port 612 of the first four-way valve 610 may be opened. In this way, only the electric assembly is heated, a heat exchange effect is better, and a heating or cooling rate is faster.

In some embodiments, as shown in FIG. 5 to FIG. 8, the battery waterway 200 includes a heater 230. The heater 230 is connected to the battery 210, the heater 230 may be arranged between the battery 210 and the first four-way valve 610, and the heater 230 not only can heat the battery 210, but also can heat the motor 430 and the electrically controlled component 410.

When the control valve group 600 is in the first state, that is, when the heat pump module 100 performs heating, if the excess heat of the battery 210 is not enough, the heater 230 may be started to assist the heat pump module 100 in supplying heat. Alternatively, when the battery 210 needs to be heated, for example, during gun insertion charging, the control valve group 600 is in the first state in this case, the heater 230 may be started to heat the battery 210, and the heat pump module 100 may not need to be started. Therefore, energy consumption is low and safety is high. Alternatively, when both the battery 210 and the electric assembly need to be heated, the control valve group 600 is in the third state in this case, the first three-way valve 320 may be controlled to cause the coolant in the heat dissipator waterway 300 not to flow through the heat dissipator 310, the heater 230 may be then started to heat the battery 210 and the electric assembly, and second three-way valve 220 may be controlled to cause the coolant in the battery waterway 200 not to flow through the battery 210, so that the heater 230 independently heats the electric assembly.

In some embodiments, the heater 230 is a positive temperature coefficient (PTC) or an exhaust gas heat exchanger.

When a PTC is used as the heater 230, an access voltage of the PTC may be adjusted based on a required heating capacity, that is, a higher voltage indicates a greater heating capacity of the heater 230, so that the heater can assist in improving the temperatures of the battery 210 and the electric assembly and supplying heat to the heat pump module 100 when an external environmental temperature is low, and the adjustment manner is convenient.

When an exhaust gas heat exchanger is used as the heater 230 and a required heating capacity is great, a flow capacity of waste gas recovery may be increased, and when the required heating capacity is small, the flow capacity of waste gas recovery may be corresponding reduced, to further control a heating temperature. In addition, exhaust gas of an engine 710 can be reused, so that energy utilization is further improved and energy consumption is reduced.

It should be noted that, the exhaust gas heat exchanger and the PTC may be arranged simultaneously. In this case, the exhaust gas heat exchanger and the PTC may be connected in parallel, to improve the applicability.

According to the present invention, as shown in FIG. 1 to FIG. 8, the heat pump module 100 includes a compressor 110, at least one in-cabin condenser 120, an out-cabin heat exchanger 130, a gas-liquid separator 140, and at least one in-cabin evaporator 150.

One end of the in-cabin condenser 120 is connected to one end of the compressor 110, one end of the out-cabin heat exchanger 130 may be selectably connected to or disconnected from the other end of the in-cabin condenser 120 through a refrigerating front branch 131, that is, one end of the refrigerating front branch 131 is connected to the out-cabin heat exchanger 130 and the other end is connected to the in-cabin condenser 120, and the other end of the out-cabin heat exchanger 130 may be selectably connected to or disconnected from the other end of the in-cabin condenser 120 through a heating front branch 133, that is, one end of the heating front branch 133 is connected to the other end of the in-cabin condenser 120 and the other end is connected to the other end of the out-cabin heat exchanger 130.

One end of the in-cabin evaporator 150 may be selectably connected to or disconnected from the other end of the out-cabin heat exchanger 130 through a refrigerating rear branch 132, the gas-liquid separator 140 is connected between the other end of the compressor 110 and the other end of the in-cabin evaporator 150, and the end of the out-cabin heat exchanger 130 may be selectably connected to or disconnected from the other end of the compressor 110 through a heating rear branch 136 and the gas-liquid separator 140.

Alternatively, the end of the out-cabin heat exchanger 130, the end of the refrigerating front branch 131, and the end of the heating front branch 133 are in communication with each other, the other end of the out-cabin heat exchanger 130, the end of the refrigerating rear branch 132, and the end of the heating front branch 136 are in communication with each other, and the other end of the refrigerating front branch 131 is connected to the end of the compressor 110. The other end of the refrigerating front branch 131 may be directly connected to the end of the compressor 110, or may be indirectly connected to the end of the compressor 110 through the in-cabin condenser 120 that does not work, the other end of the refrigerating rear branch 132 is connected to the end of the in-cabin evaporator 150, the other end of the heating front branch 133 is connected to the other end of the in-cabin condenser 120, and the other end of the heating rear branch 136 is connected to the end of the gas-liquid separator 140.

One end of the first heat exchange path 510 may be selectably connected to or disconnected from the other end of the in-cabin condenser 120 through the heating front branch 133, the end of the first heat exchange path 510 may be selectably connected to or disconnected from the other end of the out-cabin heat exchanger 130 through the refrigerating rear branch 132, and the other end of the first heat exchange path 510 is connected to the other end of the compressor 110 through the gas-liquid separator 140.

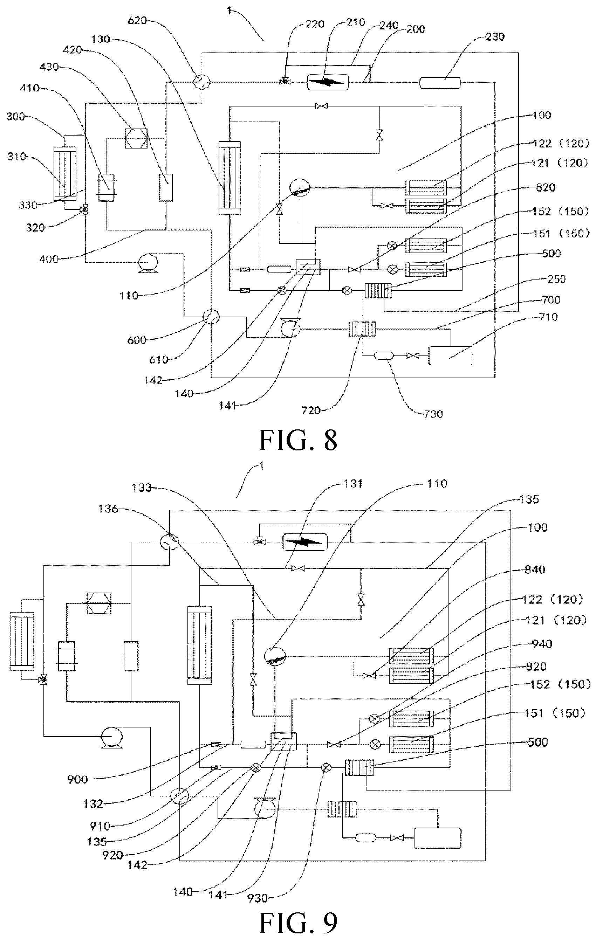

For example, during refrigeration by the heat pump module 100, as shown in FIG. 9, the refrigerant of the heat pump module 100 may flow from the compressor 110 into the in-cabin condenser 120. In this case, the refrigerant flows into the refrigerating front branch 131 through the in-cabin condenser 120, then flows to the out-cabin heat exchanger 130, and the refrigerant further flows, after heat is dissipated by the out-cabin heat exchanger 130, back to the compressor 110 through the gas-liquid separator 140, the in-cabin evaporator 150, and the gas-liquid separator 140 sequentially. The flowing process of the refrigerant is performed sequentially and circularly.

During refrigeration by the heat pump module 100, the in-cabin condenser 120 does not work or is only configured for dehumidification rather than heating the passenger cabin. In this case, the out-cabin heat exchanger 130 is used as a condenser.

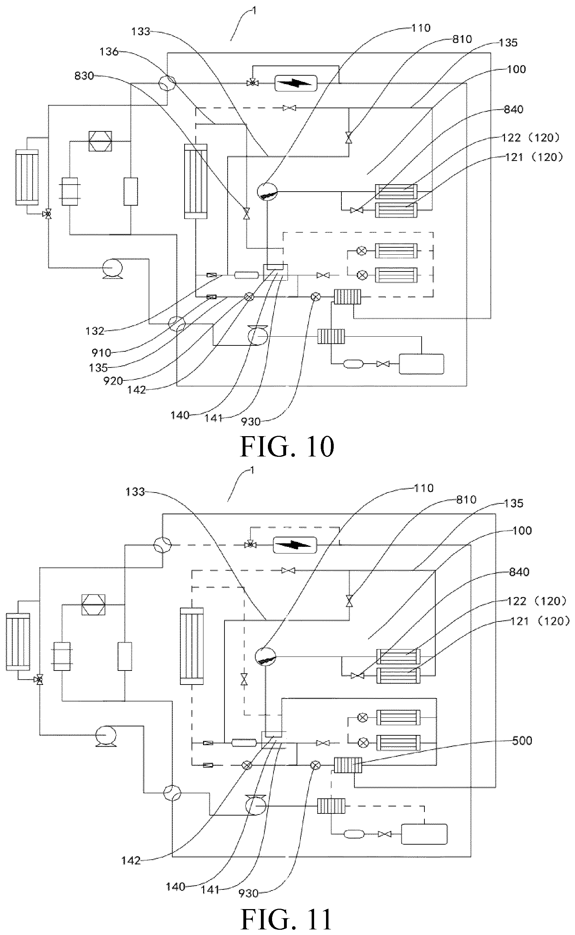

During heating by the heat pump module 100, as shown in FIG. 10, the refrigerant of the heat pump module 100 may flow from the compressor 110 into the in-cabin condenser 120. The refrigerant flows into the heating front branch 133 through the in-cabin condenser 120, and then flows to the gas-liquid separator 140 and the out-cabin heat exchanger 130. In this case, the out-cabin heat exchanger 130 functions as an evaporator, and the out-cabin heat exchanger 130 absorb heat outside a vehicle to supply heat to the heat pump module 100 for heating. After flowing through the out-cabin heat exchanger 130, the refrigerant then flows back to the compressor 110 through the heating rear branch and the gas-liquid separator 140. The flowing process of the refrigerant is performed sequentially and circularly.

Alternatively, during heating by the heat pump module 100, as shown in FIG. 11, the refrigerant of the heat pump module 100 may flow from the compressor 110 into the in-cabin condenser 120, the refrigerant then flows into the heating front branch 133 through the in-cabin condenser 120 and flows to the gas-liquid separator 140, and the refrigerant flows to the first heat exchanger 500 after flowing out of the gas-liquid separator 140. In this case, the first heat exchanger 500 functions as an evaporator, the first heat exchanger may absorb heat of the heat exchange waterway 250 and utilize the heat of the heat exchange waterway 250 to supply heat to the heat pump module 100 for heating. The refrigerant then flows back to the compressor 110 through the gas-liquid separator 140. The flowing process of the refrigerant is performed sequentially and circularly.

Optionally, a second two-way valve 800 is arranged on the refrigerating front branch 131, a first one-way valve 900 and a third two-way valve 820 are arranged on the refrigerating rear branch 132, where the first one-way valve 900 allows the refrigerant of the out-cabin heat exchanger 130 to flow to the in-cabin evaporator 150 and prevents the refrigerant of the in-cabin evaporator 150 from flowing to the out-cabin heat exchanger 130. A fourth two-way valve 810, a first electromagnetic expansion valve 920, and a second one-way valve 910 are arranged on the heating front branch 133, where the second one-way valve 910 allows the refrigerant of the in-cabin evaporator 150 to flow to the out-cabin heat exchanger 130 and prevents the refrigerant of the out-cabin heat exchanger 130 from flowing to the in-cabin evaporator 150. A fifth two-way valve 830 is arranged on the heating rear branch 136, and the end of the first heat exchange path 510 is connected to the heating front branch 133 and the refrigerating rear branch 132 through a second electromagnetic expansion valve 930.

**In** addition, the gas-liquid separator 140 includes a first flow path 141 and a second flow path 142. One end of the first flow path 141 is connected to one end of a first segment 134 of the first one-way valve 900, the other end of the first flow path 141 is connected to the third two-way valve 820, the second electromagnetic expansion valve 930, and one end of a second segment 135, one end of the second flow path 142 is connected to the other end of the in-cabin evaporator 150, the heating rear branch 136, and the other end of the first heat exchange path 510, and the other end of the second flow path 142 is connected to the other end of the compressor 110. A flowing direction of the refrigerant can be controlled by controlling opening and closing of multiple valve bodies.

Specifically, during refrigeration by the heat pump module 100, as shown in FIG. 9, the refrigerant of the heat pump module 100 may flow from the compressor 110 into the in-cabin condenser 120. In this case, the second two-way valve 800 is opened, the fourth two-way valve 810 and the fifth two-way valve 830 are closed, and the refrigerant flows through the in-cabin condenser 120 and then flows to the out-cabin heat exchanger 130. The first one-way valve 900 allows the refrigerant to flow from the out-cabin heat exchanger 130 to the first flow path 141, and the first one-way valve 900 prevents the refrigerant from flowing from the first flow path 141 to the out-cabin heat exchanger 130. The refrigerant flows to the first flow path 141, the third two-way valve 820 is opened, and the refrigerant flows back to the compressor 110 through the in-cabin evaporator 150 and the second flow path 142. The flowing process of the refrigerant is performed sequentially and circularly.

During refrigeration by the heat pump module 100, if the second electromagnetic expansion valve 930 is closed, a refrigeration capacity of the heat pump module 100 is completely used for refrigerating the passenger cabin; and if the second electromagnetic expansion valve 930 is opened, the refrigerant of the heat pump module 100 exchanges heat with the heat exchange waterway 250 through the first heat exchanger 500, that is, a part of the refrigeration capacity of the heat pump module 100 is used for refrigerating the passenger cabin, and the remaining refrigeration capacity of the heat pump module 100 is used for cooling at least one of the battery 210 and the electric assembly. During heating by the heat pump module 100, as shown in FIG. 10, the refrigerant of the heat pump module 100 may flow from the compressor 110 into the in-cabin condenser 120. In this case, the second two-way valve 800 is closed, the fourth two-way valve 810 and the fifth two-way valve 830 are opened, and the refrigerant flows through the in-cabin condenser 120 and then flows to the first flow path 141. The third two-way valve 820 is closed, the second one-way valve 910 allows the refrigerant to flow from the first flow path 141 to the out-cabin heat exchanger 130, and the second one-way valve 910 prevents the refrigerant from flowing from the out-cabin heat exchanger 130 to the first flow path 141. The refrigerant flows to the out-cabin heat exchanger 130 and the second flow path 142 and then flows back to the compressor 110. The flowing process of the refrigerant is performed sequentially and circularly.

Alternatively, during heating by the heat pump module 100, as shown in FIG. 11, the refrigerant of the heat pump module 100 may flow from the compressor 110 into the in-cabin condenser 120. In this case, the second two-way valve 800 and the fifth two-way valve 830 are closed, the fourth two-way valve 810 is opened, and the refrigerant flows through the in-cabin condenser 120 and then flows to the first flow path 141. The third two-way valve 820 and the first electromagnetic expansion valve 920 are closed, the second electromagnetic expansion valve 930 is opened, and the refrigerant flows to the first heat exchanger 500. The refrigerant then flows back to the compressor 110 through the second flow path 142. The flowing process of the refrigerant is performed sequentially and circularly.

During heating by the heat pump module 100, if the second electromagnetic expansion valve 930 is closed, a heating capacity of the heat pump module 100 is completely used for heating the passenger cabin; and if the second electromagnetic expansion valve 930 is opened, the refrigerant of the heat pump module 100 exchanges heat with the heat exchange waterway 250 through the first heat exchanger 500, that is, a part of the heating capacity of the heat pump module 100 is used for heating the passenger cabin, and the remaining heating capacity of the heat pump module 100 is used for heating at least one of the battery 210 and the electric assembly.

In some specific embodiments of the present invention, the heating front branch 133 includes the first segment 134 and the second segment 135. One end of the first segment 134 is connected to the end of the in-cabin condenser 120, the other end of the first segment 134 is connected to the other end of the refrigerating front branch 131, one end of the second segment 135 is connected to the end of the in-cabin evaporator 150, and the other end of the second segment 135 is connected to the other side of the out-cabin heat exchanger 130. The fourth two-way valve 810 is arranged on the first segment 134, and the first electromagnetic expansion valve 920 and the second one-way valve 910 are arranged on the second segment 135.

In this way, the other end of the refrigerating front branch 131, the other end of the first segment 134, the other end of the in-cabin evaporator 150, the end of the first heat exchange path 510, and the end of the second segment 135 are connected to each other, and different modes may be implemented by using multiple valve bodies such as the first one-way valve 900, the third two-way valve 820, the first electromagnetic expansion valve 920, the second electromagnetic expansion valve 930, and the second one-way valve 910.

In some specific embodiments of the present invention, the gas-liquid separator 140 includes the first flow path 141 and the second flow path 142. One end of the first flow path 141 is connected to the end of the first segment 134 of the first one-way valve 900, the other end of the first flow path 141 is connected to the third two-way valve 820, the second electromagnetic expansion valve 930, and the end of the second segment 135, one end of the second flow path 142 is connected to the other end of the in-cabin evaporator 150, the heating rear branch 136, and the other end of the first heat exchange path 510, and the other end of the second flow path 142 is connected to the other end of the compressor 110.

The first flow path 141 of the gas-liquid separator 140 may be a high-pressure flow path, the second flow path 142 may be a low-pressure flow path, and the first flow path 141 and the second flow path 142 of the gas-liquid separator 140 may perform heat exchange, to perform gas-liquid separation on the refrigerant flowing through the second flow path 142. Therefore, the refrigeration and heating efficiency of the heat pump module 100 are improved, and the compressor 110 can be protected.

It should be noted that, the first electromagnetic expansion valve 920 may control a flow rate of the refrigerant between the first flow path 141 and the in-cabin evaporator 150. The first electromagnetic expansion valve 920 may be completely closed, to disconnect the first flow path 141 and the in-cabin evaporator 150, and the first electromagnetic expansion valve 920 may be replaced with a combination of an expansion valve and a two-way valve.

**In** addition, the second electromagnetic expansion valve 930 may control a flow rate of the coolant between the first flow path 141 and the first heat exchange path 510. The second electromagnetic expansion valve 930 may be completely closed, to disconnect the first flow path 141 and the first heat exchange path 510, and the second electromagnetic expansion valve 930 may be replaced with a combination of an expansion valve and a two-way valve.

According to the present invention, as shown in FIG. 1 to FIG. 8, there are multiple in-cabin condensers 120, and the multiple in-cabin condensers 120 include a first in-cabin condenser 121 and a second in-cabin condenser 122. In this way, through the multiple in-cabin condensers 120, a heating effect for the passenger cabin may be improved, and a temperature of the passenger cabin may be improved quickly. For example, the first in-cabin condenser 121 and the second in-cabin condenser 122 may be arranged at different positions of the vehicle 2, so that the first in-cabin condenser 121 and the second in-cabin condenser 122 may transfer heat to various parts of the passenger cabin quickly.

Specifically, one end of the first in-cabin condenser 121 is connected to the end of the compressor 110 and the other end is connected to the second two-way valve 800 and the fourth two-way valve 810, and one end of the second in-cabin condenser 122 is connected to the end of the compressor 110 through the first two-way valve 840 and the other end is connected to the second two-way valve 800 and the fourth two-way valve 810.

**In** this way, by opening the first two-way valve 840, the second in-cabin condenser 122 may be in communication with the compressor 110, or when a required heating capacity of the passenger cabin is low or during refrigeration by the heat pump module 100, the first two-way valve 840 may be closed to disconnect the second in-cabin condenser 122, to further reduce a heating capacity of the in-cabin condenser 120.

According to the present invention, as shown in FIG. 1 to FIG. 8, there are multiple in-cabin evaporators 150, and the multiple in-cabin evaporators 150 include a first in-cabin evaporator 151 and a second in-cabin evaporator 152. In this way, through the multiple in-cabin evaporators 150, a refrigeration effect for the passenger cabin may be improved, and the temperature of the passenger cabin may be reduced quickly. For example, the first in-cabin evaporator 151 and the second in-cabin evaporator 152 may be arranged at different positions of the vehicle 2, so that the first in-cabin evaporator 151 and the second in-cabin evaporator 152 may transfer cold energy to various parts of the passenger cabin quickly.

Specifically, one end of the first in-cabin evaporator 151 is connected to the third two-way valve 820 through one expansion valve 940, the other end of the first in-cabin evaporator 151 is respectively connected to the fifth two-way valve 830 and the other end of the second flow path 142, one end of the second in-cabin evaporator 152 is connected to the third two-way valve 820 through another expansion valve 940, and the other end of the second in-cabin evaporator 152 is respectively connected to the fifth two-way valve 830 and the other end of the second flow path 142. The first in-cabin evaporator 151 and the second in-cabin evaporator 152 are connected in parallel.

In some specific embodiments of the present invention, as shown in FIG. 1 and FIG. 5, the thermal management system 1 further includes an engine waterway 700 and a second heat exchanger 720.

The second heat exchanger 720 includes a third heat exchange path 721 and a fourth heat exchange path 722, the third heat exchange path 721 is connected to the heat exchange waterway 250, and the fourth heat exchange path 722 is connected to the engine waterway 700. The second heat exchanger 720 may be a plate heat exchanger.

Specifically, the coolant of the heat exchange waterway 250 may flow through the third heat exchange path 721, a coolant of the engine waterway 700 may flow through the fourth heat exchange path 722, the third heat exchange path 721 is not in communication with the fourth heat exchange path 722, and the coolant in the third heat exchange path 721 and the coolant in the fourth heat exchange path 722 may perform heat exchange.

**In** this way, when a temperature of the coolant of the engine waterway 700 is greater than the temperature of the coolant of the electric assembly waterway 400 and is further greater than the environmental temperature, the control valve group 600 is in the first state, the coolant of the engine waterway 700 and the coolant of the heat exchange waterway 250 may be exchanged through the second heat exchanger 720, and the heat exchange waterway 250 may absorb excess heat of the engine 710 through the second heat exchanger 720 and supply heat to the heat pump module 100 through the first heat exchanger 500, so that heating is performed in the passenger cabin, and energy consumption is further reduced.

Alternatively, when the vehicle 2 is started in a cold environment, the temperature of the coolant of the battery waterway 200 and the environmental temperature are both less than -5°C, and the heat pump module 100 may not work. In this case, the control valve group 600 is in the first state, the coolant of the engine waterway 700 and the coolant of the heat exchange waterway 250 may be exchanged through the second heat exchanger 720, and the heat exchange waterway 250 may absorb excess heat of the engine 710 through the second heat exchanger 720 and supply heat to the battery 210, thereby ensuring that the vehicle 2 may be started in a pure-electric mode.

Alternatively, when the control valve group 600 is in the third state, the second three-way valve 220 may control the coolant in the battery waterway 200 not to flow through the battery 210. In this case, the coolant of the engine waterway 700 and the coolant of the heat exchange waterway 250 may be exchanged through the second heat exchanger 720, and the heat exchange waterway 250 may absorb excess heat of the engine 710 through the second heat exchanger 720 and supply heat to the electric assembly, thereby ensuring the working efficiency of the electric assembly.

**In** some embodiments, as shown in FIG. 1 and FIG. 5, the engine waterway 700 includes an engine 710 and a sixth two-way valve 850, where the sixth two-way valve 850 is connected to the engine 710 in series. By opening the sixth two-way valve 850, the engine waterway 700 may be in communication with the fourth heat exchange path 722, and by closing the sixth two-way valve 850, the engine waterway 700 may be disconnected from the fourth heat exchange path 722. Therefore, when the excess heat of the engine 710 does not need to be utilized, for example, in a refrigeration working condition of the heat pump module 100 or in a working condition that the battery 210 and the electric assembly do not need to be heated, the engine waterway 700 may be disconnected from the fourth heat exchange path 722, so that structure arrangement is more proper and operations thereof are more convenient.

In some specific embodiments of the present invention, as shown in FIG. 1 and FIG. 5, the engine waterway 700 includes a warm air system 730, where the warm air system 730 is connected to the engine 710 in series. In this way, when the environmental temperature is low, the warm air system 730 may supply warm air to the passenger cabin, to improve the temperature of the passenger cabin. Specifically, the sixth two-way valve 850 is in an opened state, and in this case, the vehicle 2 may utilize the excess heat of the engine 710 and the warm air system 730 to jointly heat the passenger cabin, thereby improving the riding comfort.

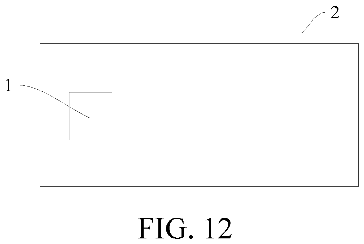

The following describes a vehicle 2 according to the embodiments of the present invention with reference to the accompanying drawings. As shown in FIG. 12, the vehicle 2 includes the thermal management system 1 according to the foregoing embodiments of the present invention. The vehicle 2 may be an electric vehicle or a hybrid vehicle.

The vehicle 2 according to the embodiments of the present invention can, by utilizing the thermal management system 1 described in the foregoing embodiments of the present invention, fully utilize the excess heat of the battery 210 and the electric assembly, and can heat or cool the battery 210 and the electric assembly in various working conditions, so that the vehicle has advantages such as high energy utilization and a high integration level.

Other configurations and operations of the thermal management system 1 according to the embodiments of this application and the vehicle 2 having the thermal management system are known to a person of ordinary skill in the art and will not be described in detail herein.

In the description of the present invention, description of reference terms such as "a specific embodiment" or "a specific example" means that a specific feature, structure, material, or characteristic that is described with reference to the embodiment or the example is included in at least one embodiment or example of the present invention. In this specification, schematic descriptions of the foregoing terms do not necessarily indicate a same embodiment or example.

Although the embodiments of the present invention have been shown and described, a person of ordinary skill in the art should understand that various changes, modifications and variations may be made to the embodiments without departing form the scope of the present invention as defined by the appended claims.

### Reference numerals:

Thermal management system 1, Vehicle 2,
Heat pump module 100, Compressor 110, In-cabin condenser 120, First in-cabin condenser 121, Second in-cabin condenser 122, Out-cabin heat exchanger 130, Refrigerating front branch 131, Refrigerating rear branch 132, Heating front branch 133, First segment 134, Second segment 135, Heating rear branch 136, Gas-liquid separator 140, First flow path 141, Second flow path 142, In-cabin evaporator 150, First in-cabin evaporator 151, Second in-cabin evaporator 152,
Battery waterway 200, Battery 210, Second three-way valve 220, Heater 230, Second direct connection branch 240,
Heat exchange waterway 250,
Heat dissipator waterway 300, Heat dissipator 310, First three-way valve 320, First direct connection branch 330,
Electric assembly waterway 400, Electrically controlled component 410, Intercooler 420, Motor 430,
First heat exchanger 500, First heat exchange path 510, Second heat exchange path 520,
Control valve group 600, First four-way valve 610, First valve port 611, Second valve port 612, Third valve port 613, Fourth valve port 614, Second four-way valve 620, Fifth valve port 621, Sixth valve port 622, Seventh valve port 623, Eighth valve port 624,
Engine waterway 700, Engine 710,
Second heat exchanger 720, Third heat exchange path 721, Fourth heat exchange path 722, Warm air system 730,
Second two-way valve 800, Fourth two-way valve 810, Third two-way valve 820, Fifth two-way valve 830, First two-way valve 840, Sixth two-way valve 850,
First one-way valve 900, Second one-way valve 910, First electromagnetic expansion valve 920, Second electromagnetic expansion valve 930, Expansion valve 940.

## Claims

1. A thermal management system (1), comprising:
a heat pump module (100);
a battery waterway (200);
a heat exchange waterway (250);
a heat dissipator waterway (300);
an electric assembly waterway (400);
a first heat exchanger (500), the first heat exchanger (500) comprising a first heat exchange path (510) and a second heat exchange path (520), the first heat exchange path (510) being in communication with the heat pump module (100), and the second heat exchange path (520) being in communication with the heat exchange waterway (250); and
a control valve group (600), the control valve group (600) being switchable among a first state, a second state, and a third state, and the control valve group (600) being respectively in communication with the battery waterway (200), the heat exchange waterway (250), the heat dissipator waterway (300), and the electric assembly waterway (400),
wherein when the control valve group (600) is in the first state, the electric assembly waterway (400) is in communication with the heat dissipator waterway (300) in series, or the battery waterway (200) is in communication with the heat exchange waterway (250) in series, or the electric assembly waterway (400) is in communication with the heat dissipator waterway (300) in series and the battery waterway (200) is in communication with the heat exchange waterway (250) in series;
when the control valve group (600) is in the second state, the electric assembly waterway (400) is in communication with the heat exchange waterway (250) in series, or the battery waterway (200) is in communication with the heat dissipator waterway (300) in series, or the electric assembly waterway (400) is in communication with the heat exchange waterway (250) in series and the battery waterway (200) is in communication with the heat dissipator waterway (300) in series; and
when the control valve group (600) is in the third state, the battery waterway (200), the heat exchange waterway (250), the heat dissipator waterway (300), and the electric assembly waterway (400) are in communication with each other in series,
wherein the heat pump module (100) comprises:
a compressor (110);
at least one in-cabin condenser (120), one end of the in-cabin condenser (120) being connected to one end of the compressor (110);
an out-cabin heat exchanger (130), one end of the out-cabin heat exchanger (130) being selectably connected to or disconnected from the other end of the in-cabin condenser (120) through a refrigerating front branch (131), and the other end of the out-cabin heat exchanger (130) being selectably connected to or disconnected from the other end of the in-cabin condenser (120) through a heating front branch (133);
at least one in-cabin evaporator (150), one end of the in-cabin evaporator (150) being selectably connected to or disconnected from the other end of the out-cabin heat exchanger (130) through a refrigerating rear branch (132); and
a gas-liquid separator (140), the gas-liquid separator (140) being connected between the other end of the compressor (110) and the other end of the in-cabin evaporator (150), and the end of the out-cabin heat exchanger (130) being selectably connected to or disconnected from the other end of the compressor (110) through a heating rear branch (136) and the gas-liquid separator (140),
wherein one end of the first heat exchange path (510) is selectably connected to or disconnected from the other end of the in-cabin condenser (120) through the heating front branch (133), the end of the first heat exchange path (510) is selectably connected to or disconnected from the other end of the out-cabin heat exchanger (130) through the refrigerating rear branch (132), and the other end of the first heat exchange path (510) is connected to the other end of the compressor (110) through the gas-liquid separator (140),
**characterized in that**
there are a plurality of in-cabin condensers (120), the plurality of in-cabin condensers (120) comprise a first in-cabin condenser (121) and a second in-cabin condenser (122), one end of the first in-cabin condenser (121) is connected to the end of the compressor (110), the other end of the first in-cabin condenser (121) is connected to the refrigerating front branch (131), one end of the second in-cabin condenser (122) is connected to the end of the compressor (110) through a first two-way valve (840), and the other end of the second in-cabin condenser (122) is connected to the refrigerating front branch (131).

2. The thermal management system (1) according to claim 1, wherein the control valve group (600) comprises:
a first four-way valve (610), the first four-way valve (610) comprising a first valve port (611), a second valve port (612), a third valve port (613), and a fourth valve port (614), the first valve port (611) being connected to one end of the heat dissipator waterway (300), the second valve port (612) being connected to one end of the battery waterway (200), the third valve port (613) being connected to one end of the heat exchange waterway (250), and the fourth valve port (614) being connected to one end of the electric assembly waterway (400); and
a second four-way valve (620), the second four-way valve (620) comprising a fifth valve port (621), a sixth valve port (622), a seventh valve port (623), and an eighth valve port (624), the fifth valve port (621) being connected to the other end of the electric assembly waterway (400), the sixth valve port (622) being connected to the other end of the heat dissipator waterway (300), the seventh valve port (623) being connected to the other end of the battery waterway (200), and the eighth valve port (624) being connected to the other end of the heat exchange waterway (250),
wherein when the control valve group (600) is in the first state, the first valve port (611) is in communication with the fourth valve port (614), the second valve port (612) is in communication with the third valve port (613), the fifth valve port (621) is in communication with the sixth valve port (622), and the seventh valve port (623) is in communication with the eighth valve port (624);
when the control valve group (600) is in the second state, the first valve port (611) is in communication with the second valve port (612), the third valve port (613) is in communication with the fourth valve port (614), the fifth valve port (621) is in communication with the eighth valve port (624), and the sixth valve port (622) is in communication with the seventh valve port (623); and
when the control valve group (600) is in the third state, the first valve port (611) is in communication with the second valve port (612), the third valve port (613) is in communication with the fourth valve port (614), the fifth valve port (621) is in communication with the sixth valve port (622), and the seventh valve port (623) is in communication with the eighth valve port (624); or the first valve port (611) is in communication with the fourth valve port (614), the second valve port (612) is in communication with the third valve port (613), the fifth valve port (621) is in communication with the eighth valve port (624), and the sixth valve port (622) is in communication with the seventh valve port (623).

3. The thermal management system (1) according to claim 1 or 2, wherein the electric assembly waterway (400) comprises:
an electrically controlled component (410);
an intercooler (420), the intercooler (420) being connected to the electrically controlled component (410) in parallel; and
a motor (430), the motor (430) being connected to the electrically controlled component (410) in series and the motor (430) being located downstream of the electrically controlled component (410), or the motor (430) being connected to the intercooler (420) in series and the motor (430) being located downstream of the intercooler (420).

4. The thermal management system (1) according to any one of claims 1 to 3, wherein the heat dissipator waterway (300) comprises:
a heat dissipator (310) and a first direct connection branch (330), the heat dissipator (310) being connected to the first direct connection branch (330) in parallel, and a coolant in the heat dissipator waterway (300) selectably flowing through the heat dissipator (310) or the first direct connection branch (330).

5. The thermal management system (1) according to any one of claims 1 to 4, wherein the battery waterway (200) comprises:
a battery (210) and a second direct connection branch (240), the battery (210) being connected to the second direct connection branch (240) in parallel, and a coolant in the battery waterway (200) selectably flowing through the battery (210) or the second direct connection branch (240).

6. The thermal management system (1) according to claim 5, wherein the battery waterway (200) further comprises:
a heater (230), the heater (230) being connected to the battery (210),
particularly wherein the heater (230) is a PTC or an exhaust gas heat exchanger.

7. The thermal management system (1) according to any of claims 1 to 6, wherein there are a plurality of in-cabin evaporators (150), the plurality of in-cabin evaporators (150) comprise a first in-cabin evaporator (150) and a second in-cabin evaporator (150), one end of the first in-cabin evaporator (150) is connected to the refrigerating rear branch (132) through one expansion valve (940), the other end of the first in-cabin evaporator (150) is connected to the gas-liquid separator (140), one end of the second in-cabin evaporator (150) is connected to the refrigerating rear branch (132) through another expansion valve (940), and the other end of the second in-cabin evaporator (150) is connected to the gas-liquid separator (140).

8. The thermal management system (1) according to any one of claims 1 to 7, wherein
a second two-way valve (800) is arranged on the refrigerating front branch (131);
a first one-way valve (900) and a third two-way valve (820) are arranged on the refrigerating rear branch (132), the first one-way valve (900) allows a refrigerant of the out-cabin heat exchanger (130) to flow to the in-cabin evaporator (150), and the first one-way valve (900) prevents a refrigerant of the in-cabin evaporator (150) from flowing to the out-cabin heat exchanger (130);
a fourth two-way valve (810), a first electromagnetic expansion valve (920), and a second one-way valve (910) are arranged on the heating front branch (133), the second one-way valve (910) allows the refrigerant of the in-cabin evaporator (150) to flow to the out-cabin heat exchanger (130), and the second one-way valve (910) prevents the refrigerant of the out-cabin heat exchanger (130) from flowing to the in-cabin evaporator (150);
a fifth two-way valve (830) is arranged on the heating rear branch (136); and
the end of the first heat exchange path (510) is connected to the heating front branch (133) and the refrigerating rear branch (132) through a second electromagnetic expansion valve (930).

9. The thermal management system (1) according to claim 8, wherein the heating front branch (133) comprises:
a first segment (134), one end of the first segment (134) being connected to the end of the in-cabin condenser (120), and the other end of the first segment (134) being respectively connected to the first one-way valve (900), the third two-way valve (820), and the second electromagnetic expansion valve (930); and
a second segment (135), one end of the second segment (135) being connected to the other end of the first segment (134), and the other end of the second segment (135) being connected to the other end of the out-cabin heat exchanger (130),
wherein the fourth two-way valve (810) is arranged on the first segment (134), and the first electromagnetic expansion valve (920) and the second one-way valve (910) are arranged on the second segment (135).

10. The thermal management system (1) according to claim 9, wherein the gas-liquid separator (140) comprises:
a first flow path (141), one end of the first path (141) being connected to the first one-way valve (900) and the end of the first segment (134), and the other end of the first flow path (141) being connected to the third two-way valve (820), the second electromagnetic expansion valve (930), and the end of the second segment (135); and
a second flow path (142), one end of the second flow path (142) being connected to the other end of the in-cabin evaporator (150), the heating rear branch (136), and the other end of the first heat exchange path (510), and the other end of the second flow path (142) being connected to the other end of the compressor (110).

11. The thermal management system (1) according to any one of claims 1 to 10, further comprising:
an engine waterway (700); and
a second heat exchanger (720), the second heat exchanger (720) comprising a third heat exchange path (721) and a fourth heat exchange path (722), the third heat exchange path (721) being connected to the heat exchange waterway (250), and the fourth heat exchange path (722) being connected to the engine waterway (700).

12. The thermal management system (1) according to claim 11, wherein the engine waterway (700) comprises:
an engine (710); and
a sixth two-way valve (850), the sixth two-way valve (850) being connected to the engine (710) in series,
particularly wherein the engine waterway (700) comprises:
a warm air system (730), the warm air system (730) being connected to the engine (710) in series.

13. A vehicle (2), comprising the thermal management system (1) according to any one of claims 1 to 12.

## Patentansprüche

1. Wärmemanagementsystem (1), bestehend aus:
ein Wärmepumpenmodul (100);
einen Batteriewasserkanal (200);
einen Wärmetauscher-Wasserkanal bzw. Wärmeaustauschwasserkanal (250);
einen Wärmeableitungswasserkanal (300);
einen elektrischen Baugruppen-Wasserkanal (400);
einen ersten Wärmetauscher (500), wobei der erste Wärmetauscher (500) einen ersten Wärmeaustauschpfad (510) und einen zweiten Wärmeaustauschpfad (520) umfasst, wobei der erste Wärmeaustauschpfad (510) mit dem Wärmepumpenmodul (100) in Verbindung steht und der zweite Wärmeaustauschpfad (520) mit dem Wärmeaustauschwasserkanal (250) in Verbindung steht; und
eine Steuerventilgruppe (600), wobei die Steuerventilgruppe (600) zwischen einem ersten Zustand, einem zweiten Zustand und einem dritten Zustand umschaltbar ist und die Steuerventilgruppe (600) jeweils mit dem Batteriewasserkanal (200), dem Wärmeaustauschwasserkanal (250), dem Wärmeableitungswasserkanal (300) und dem Wasserkanal (400) der elektrischen Baugruppe in Kommunikation steht,
wobei, wenn sich die Steuerventilgruppe (600) in dem ersten Zustand befindet, der Wasserkanal (400) der elektrischen Baugruppe in Reihe mit dem Wärmeableitungswasserkanal (300) in Verbindung steht oder der Batteriewasserkanal (200) in Reihe mit dem Wärmeaustauschwasserkanal (250) in Verbindung steht oder der elektrische Baugruppenwasserkanal (400) in Reihe mit dem Wärmeableitungswasserkanal (300) in Verbindung steht und der Batteriewasserkanal (200) in Reihe mit dem Wärmeaustauschwasserkanal (250) in Verbindung steht;
wenn sich die Steuerventilgruppe (600) in dem zweiten Zustand befindet, der Wasserkanal (400) der elektrischen Baugruppe in Reihe mit dem Wärmeaustauschwasserkanal (250) verbunden ist oder der Batteriewasserkanal (200) in Reihe mit dem Wärmeableitungswasserkanal (300) in Verbindung steht, oder der elektrische Baugruppenwasserkanal (400) in Reihe mit dem Wärmeaustauschwasserkanal (250) in Verbindung steht und der Batteriewasserkanal (200) in Reihe mit dem Wärmeableitungswasserkanal (300) in Verbindung steht; und
wenn sich die Steuerventilgruppe (600) in dem dritten Zustand befindet, der Batteriewasserkanal (200), der Wärmeaustauschwasserkanal (250), der Wärmeableitungswasserkanal (300) und der elektrische Baugruppenwasserkanal (400) in Reihe miteinander verbunden sind,
wobei das Wärmepumpenmodul (100) umfasst:
einen Kompressor (110);
mindestens einen Innenraumkondensator (120), wobei ein Ende des Innenraumkondensators (120) mit einem Ende des Kompressors (110) verbunden ist;
einen Außenraum-Wärmetauscher (130), wobei ein Ende des Außenraum-Wärmetauschers (130) über einen vorderen Kühlzweig (131) wahlweise mit dem anderen Ende des Innenraumkondensators (120) verbunden oder von diesem getrennt werden kann, und wobei das andere Ende des AußenraumWärmetauschers (130) wahlweise über einen Heizungs-Frontzweig (133) mit dem anderen Ende des Innenraum-Kondensators (120) verbunden oder von diesem getrennt werden kann;
mindestens einen Innenraumverdampfer (150), wobei ein Ende des Innenraumverdampfers (150) über einen hinteren Kühlzweig (132) wahlweise mit dem anderen Ende des Außenraumwärmetauschers (130) verbunden oder von diesem getrennt werden kann; und
einen Gas-Flüssigkeits-Separator (140), wobei der Gas-Flüssigkeits-Separator (140) zwischen dem anderen Ende des Kompressors (110) und dem anderen Ende des Innenraumverdampfers (150) angeschlossen ist, und wobei das Ende des Außenraum-Wärmetauschers (130) über einen Heizungs-Rücklauf (136) und den Gas-Flüssigkeits-Separator (140) wahlweise mit dem anderen Ende des Kompressors (110) verbunden oder von diesem getrennt werden kann,
wobei ein Ende des ersten Wärmeaustauschpfads (510) wahlweise über den vorderen Heizungszweig (133) mit dem anderen Ende des Innenraumkondensators (120) verbunden oder von diesem getrennt ist, das Ende des ersten Wärmeaustauschpfads (510) wahlweise über den hinteren Kühlzweig (132) mit dem anderen Ende des Außenraum-Wärmetauschers (130) verbunden oder von diesem getrennt ist und das andere Ende des ersten Wärmeaustauschpfads (510) über den Gas-Flüssigkeits-Abscheider (140) mit dem anderen Ende des Kompressors (110) verbunden ist,
**dadurch gekennzeichnet, dass**
es mehrere Innenraumkondensatoren (120) gibt, wobei die mehreren Innenraumkondensatoren (120) einen ersten Innenraumkondensator (121) und einen zweiten Innenraumkondensator (122) umfassen, ein Ende des ersten Innenraumkondensators (121) mit dem Ende des Kompressors (110) verbunden ist, das andere Ende des ersten Innenraumkondensators (121) mit dem vorderen Kühlzweig (131) verbunden ist, ein Ende des zweiten Innenraumkondensators (122) ist über ein erstes Zweiwegeventil (840) mit dem Ende des Kompressors (110) verbunden, und das andere Ende des zweiten Innenraumkondensators (122) ist mit dem vorderen Kühlzweig (131) verbunden.

2. Wärmemanagementsystem (1) gemäß Anspruch 1, wobei die Steuerventilgruppe (600) umfasst:
ein erstes Vierwegeventil (610), wobei das erste Vierwegeventil (610) einen ersten Ventilanschluss (611), einen zweiten Ventilanschluss (612), einen dritten Ventilanschluss (613) und einen vierten Ventilanschluss (614) umfasst, wobei der erste Ventilanschluss (611) mit einem Ende des Wärmeableitungswasserkanals (300) verbunden ist, wobei der zweite Ventilanschluss (612) mit einem Ende des Batteriewasserkanals (200) verbunden ist, der dritte Ventilanschluss (613) mit einem Ende des Wärmeaustauschwasserkanals (250) verbunden ist und der vierte Ventilanschluss (614) mit einem Ende des elektrischen Baugruppenwasserkanals (400) verbunden ist; und
ein zweites Vierwegeventil (620), wobei das zweite Vierwegeventil (620) einen fünften Ventilanschluss (621), einen sechsten Ventilanschluss (622), einen siebten Ventilanschluss (623) und einen achten Ventilanschluss (624) umfasst, wobei der fünfte Ventilanschluss (621) mit dem anderen Ende des Wasserkanals (400) der elektrischen Baugruppe verbunden ist, wobei der sechste Ventilanschluss (622) mit dem anderen Ende des Kühlkörper-Wasserkanals (300) verbunden ist, der siebte Ventilanschluss (623) mit dem anderen Ende des Batterie-Wasserkanals (200) verbunden ist und der achte Ventilanschluss (624) mit dem anderen Ende des Wärmeaustausch-Wasserkanals (250) verbunden ist,
wobei, wenn sich die Steuerventilgruppe (600) in dem ersten Zustand befindet, der erste Ventilanschluss (611) mit dem vierten Ventilanschluss (614) in Verbindung steht, der zweite Ventilanschluss (612) mit dem dritten Ventilanschluss (613) in Verbindung steht, der fünfte Ventilanschluss (621) mit dem sechsten Ventilanschluss (622) in Verbindung steht und der siebte Ventilanschluss (623) mit dem achten Ventilanschluss (624) in Verbindung steht;
wenn sich die Steuerventilgruppe (600) in dem zweiten Zustand befindet, steht der erste Ventilanschluss (611) mit dem zweiten Ventilanschluss (612) in Verbindung, der dritte Ventilanschluss (613) mit dem vierten Ventilanschluss (614) in Verbindung steht, der fünfte Ventilanschluss (621) mit dem achten Ventilanschluss (624) in Verbindung steht und der sechste Ventilanschluss (622) mit dem siebten Ventilanschluss (623) in Verbindung steht; und
wenn sich die Steuerventilgruppe (600) in dem dritten Zustand befindet, steht der erste Ventilanschluss (611) mit dem zweiten Ventilanschluss (612) in Verbindung, der dritte Ventilanschluss (613) mit dem vierten Ventilanschluss (614) in Verbindung steht, der fünfte Ventilanschluss (621) mit dem sechsten Ventilanschluss (622) in Verbindung steht und der siebte Ventilanschluss (623) mit dem achten Ventilanschluss (624) in Verbindung steht; oder der erste Ventilanschluss (611) steht in Verbindung mit dem vierten Ventilanschluss (614), der zweite Ventilanschluss (612) steht in Verbindung mit dem dritten Ventilanschluss (613), der fünfte Ventilanschluss (621) steht in Verbindung mit dem achten Ventilanschluss (624) und der sechste Ventilanschluss (622) steht in Verbindung mit dem siebten Ventilanschluss (623).

3. Wärmemanagementsystem (1) gemäß Anspruch 1 oder 2, wobei die elektrische Baugruppen-Wasserleitung (400) umfasst:
eine elektrisch gesteuerte Komponente (410);
einen Ladeluftkühler (420), wobei der Ladeluftkühler (420) parallel mit der elektrisch gesteuerten Komponente (410) verbunden ist; und
einen Motor (430), wobei der Motor (430) in Reihe mit der elektrisch gesteuerten Komponente (410) geschaltet ist und sich der Motor (430) stromabwärts von der elektrisch gesteuerten Komponente (410) befindet, oder wobei der Motor (430) in Reihe mit dem Ladeluftkühler (420) geschaltet ist und sich der Motor (430) stromabwärts vom Ladeluftkühler (420) angeordnet ist.

4. Wärmemanagementsystem (1) gemäß einem der Ansprüche 1 bis 3, wobei der Wärmeableiter-Wasserweg (300) umfasst:
einen Wärmeableiter (310) und einen ersten Direktverbindungszweig (330), wobei der Wärmeableiter (310) parallel mit dem ersten Direktverbindungszweig (330) verbunden ist und ein Kühlmittel in dem Wärmeableiter-Wasserweg (300) wahlweise durch den Wärmeableiter (310) oder den ersten Direktverbindungszweig (330) fließt.

5. Wärmemanagementsystem (1) gemäß einem der Ansprüche 1 bis 4, wobei der Batteriewasserkanal (200) umfasst:
eine Batterie (210) und einen zweiten Direktverbindungszweig (240), wobei die Batterie (210) parallel zu einem mit dem zweiten Direktverbindungszweig (240) verbunden ist und ein Kühlmittel in dem Batteriewasserweg (200) wahlweise durch die Batterie (210) oder den zweiten Direktverbindungszweig (240) fließt.

6. Wärmemanagementsystem (1) gemäß Anspruch 5, wobei der Batteriewasserkanal (200) ferner umfasst:
eine Heizvorrichtung (230), wobei die Heizvorrichtung (230) mit der Batterie (210) verbunden ist,
wobei insbesondere die Heizvorrichtung (230) ein PTC oder ein Abgaswärmetauscher ist.

7. Wärmemanagementsystem (1) gemäß einem der Ansprüche 1 bis 6 , wobei mehrere Innenraumverdampfer (150) vorhanden sind, wobei die mehreren Innenraumverdampfer (150) einen ersten Innenraumverdampfer (150) und einen zweiten Innenraumverdampfer (150) umfassen, ein Ende des ersten Innenraumverdampfers (150) über ein Expansionsventil (940) mit dem hinteren Kühlzweig (132) verbunden ist, das andere Ende des ersten Innenraumverdampfers (150) mit dem Gas-Flüssigkeits-Abscheider (140) verbunden ist, ein Ende des zweiten Innenraumverdampfers (150) ist über ein weiteres Expansionsventil (940) mit dem hinteren Kühlzweig (132) verbunden, und das andere Ende des zweiten Innenraumverdampfers (150) ist mit dem Gas-Flüssigkeits-Abscheider (140) verbunden.

8. Wärmemanagementsystem (1) gemäß einem der Ansprüche 1 bis 7, wobei
ein zweites Zweiwegeventil (800) am vorderen Kühlzweig (131) angeordnet ist;
ein erstes Einwegventil (900) und ein drittes Zweiwegeventil (820) am hinteren Kühlzweig (132) angeordnet sind, das erste Einwegventil (900) ein Kältemittel des Außenraum-Wärmetauschers (130) zum Innenraum-Verdampfer (150) fließen lässt und das erste Einwegventil (900) verhindert, dass ein Kältemittel des Innenraum-Verdampfers (150) zum Außenraum-Wärmetauscher (130) fließt;
ein viertes Zweiwegeventil (810), ein erstes elektromagnetisches Expansionsventil (920) und ein zweites Einwegventil (910) sind am vorderen Heizungszweig (133) angeordnet, das zweite Einwegventil (910) ermöglicht es dem Kältemittel des Innenraumverdampfers (150), zum Außenraum-Wärmetauscher (130) zu fließen, und das zweite Einwegventil (910) verhindert, dass das Kältemittel des Außenraum-Wärmetauschers (130) zum Innenraumverdampfer (150) fließt;
ein fünftes Zweiwegeventil (830) ist am hinteren Heizungszweig (136) angeordnet; und
das Ende des ersten Wärmeaustauschpfads (510) ist über ein zweites elektromagnetisches Expansionsventil (930) mit dem vorderen Heizungszweig (133) und dem hinteren Kühlungszweig (132) verbunden.

9. Wärmemanagementsystem (1) gemäß Anspruch 8, wobei der vordere Heizungszweig (133) umfasst:
ein erstes Segment (134), wobei ein Ende des ersten Segments (134) mit dem Ende des Innenraumkondensators (120) verbunden ist und das andere Ende des ersten Segments (134) jeweils mit dem ersten Einwegventil (900), dem dritten Zweiwegventil (820) und dem zweiten elektromagnetischen Expansionsventil (930) verbunden ist; und
ein zweites Segment (135), wobei ein Ende des zweiten Segments (135) mit dem anderen Ende des ersten Segments (134) verbunden ist und das andere Ende des zweiten Segments (135) mit dem anderen Ende des Außenraum-Wärmetauschers (130) verbunden ist,
wobei das vierte Zweiwegeventil (810) auf dem ersten Segment (134) angeordnet ist und das erste elektromagnetische Expansionsventil (920) und das zweite Einwegeventil (910) auf dem zweiten Segment (135) angeordnet sind.

10. Wärmemanagementsystem (1) gemäß Anspruch 9, wobei der Gas-Flüssigkeits-Separator (140) umfasst:
einen ersten Strömungsweg (141), wobei ein Ende des ersten Weges (141) mit dem ersten Einwegventil (900) und dem Ende des ersten Segments (134) verbunden ist und das andere Ende des ersten Strömungswegs (141) mit dem dritten Zweiwegeventil (820) verbunden ist, das zweite elektromagnetische Expansionsventil (930) und das Ende des zweiten Segments (135); und
einen zweiten Strömungsweg (142), wobei ein Ende des zweiten Strömungswegs (142) mit dem anderen Ende des Innenraumverdampfers (150), dem hinteren Heizungszweig (136) und dem anderen Ende des ersten Wärmeaustauschwegs (510) verbunden ist und das andere Ende des zweiten Strömungswegs (142) mit dem anderen Ende des Kompressors (110) verbunden ist.

11. Wärmemanagementsystem (1) gemäß einem der Ansprüche 1 bis 10, das ferner umfasst:
einen Motorwasserkanal (700); und
einen zweiten Wärmetauscher (720), wobei der zweite Wärmetauscher (720) einen dritten Wärmeaustauschpfad (721) und einen vierten Wärmeaustauschpfad (722) umfasst, wobei der dritte Wärmeaustauschpfad (721) mit dem Wärmeaustauschwasserweg (250) verbunden ist und der vierte Wärmeaustauschpfad (722) mit dem Motorwasserweg verbunden ist (700) verbunden ist.

12. Wärmemanagementsystem (1) gemäß Anspruch 11, wobei der Motorwasserkanal (700) umfasst:
einen Motor (710); und
ein sechstes Zweiwegeventil (850), wobei das sechste Zweiwegeventil (850) in Reihe mit dem Motor (710) verbunden ist,
wobei insbesondere der Motorwasserkanal (700) umfasst:
ein Warmluftsystem (730), wobei das Warmluftsystem (730) in Reihe mit dem Motor (710) verbunden ist.

13. Fahrzeug (2), das das Wärmemanagementsystem (1) gemäß einem der Ansprüche 1 bis 12 umfasst.

## Revendications

1. Système de gestion thermique (1), comprenant :
un module de pompe à chaleur (100) ;
un circuit d'eau de batterie ou circuit hydraulique de la batterie (200) ;
un circuit d'eau d'échange thermique ou circuit hydraulique d'échange thermique (250) ;
un circuit d'eau de dissipateur thermique ou circuit hydraulique du dissipateur thermique (300) ;
un circuit d'eau d'assemblage électrique ou circuit hydraulique de l'ensemble électrique (400) ;
un premier échangeur de chaleur (500), le premier échangeur de chaleur (500) comprenant un premier circuit d'échange thermique (510) et un deuxième circuit d'échange thermique (520), le premier circuit d'échange thermique (510) étant en communication avec le module de pompe à chaleur (100), et le deuxième circuit d'échange thermique (520) étant en communication avec le circuit d'eau d'échange thermique (250) ; et
un groupe de vannes de commande (600), le groupe de vannes de commande (600) pouvant être commuté entre un premier état, un deuxième état et un troisième état, et le groupe de vannes de commande (600) étant respectivement en communication avec le circuit hydraulique de la batterie (200), le circuit hydraulique d'échange thermique (250), le circuit hydraulique du dissipateur thermique (300) et le circuit hydraulique de l'ensemble électrique (400),
dans lequel, lorsque le groupe de vannes de commande (600) est dans le premier état, le circuit d'eau de l'ensemble électrique (400) est en communication avec le circuit d'eau du dissipateur thermique (300) en série, ou le circuit d'eau de la batterie (200) est en communication avec le circuit d'eau d'échange thermique (250) en série, ou le circuit d'eau de l'ensemble électrique (400) est en communication avec le circuit d'eau du dissipateur thermique (300) en série et le circuit d'eau de la batterie (200) est en communication avec le circuit d'eau d'échange thermique (250) en série ;
lorsque le groupe de vannes de commande (600) est dans le deuxième état, le circuit d'eau de l'ensemble électrique (400) est en communication avec le circuit d'eau d'échange thermique (250) en série, ou le circuit d'eau de la batterie (200) est en communication avec le circuit d'eau du dissipateur thermique (300) en série, ou le circuit d'eau de l'ensemble électrique (400) est en communication avec le circuit d'eau d'échange thermique (250) en série et le circuit d'eau de la batterie (200) est en communication avec le circuit d'eau du dissipateur thermique (300) en série ; et
lorsque le groupe de vannes de commande (600) est dans le troisième état, le circuit d'eau de la batterie (200), le circuit d'eau d'échange thermique (250), le circuit d'eau du dissipateur thermique (300) et le circuit d'eau de l'ensemble électrique (400) sont en communication les uns avec les autres en série,
dans lequel le module de pompe à chaleur (100) comprend :
un compresseur (110) ;
au moins un condenseur dans l'habitacle (120), une extrémité du condenseur dans l'habitacle (120) étant reliée à une extrémité du compresseur (110) ;
un échangeur de chaleur extérieur à l'habitacle (130), une extrémité de l'échangeur de chaleur extérieur à l'habitacle (130) étant sélectionnée pour être connectée ou déconnectée de l'autre extrémité du condenseur intérieur à l'habitacle (120) par l'intermédiaire d'une branche avant de réfrigération (131), et l'autre extrémité de l'échangeur de chaleur extérieur à l'habitacle (130) étant sélectionnée pour être connectée ou déconnectée de manière sélective à l'autre extrémité du condenseur intérieur à l'habitacle (120) par l'intermédiaire d'une branche avant de chauffage (133) ;
au moins un évaporateur dans l'habitacle (150), une extrémité de l'évaporateur dans l'habitacle (150) étant sélectionnée pour être connectée ou déconnectée de l'autre extrémité de l'échangeur de chaleur à l'extérieur de l'habitacle (130) par l'intermédiaire d'une branche arrière de réfrigération (132) ; et
un séparateur gaz-liquide (140), le séparateur gaz-liquide (140) étant connecté entre l'autre extrémité du compresseur (110) et l'autre extrémité de l'évaporateur dans l'habitacle (150), et l'extrémité de l'échangeur de chaleur extérieur à la cabine (130) étant connectée ou déconnectée de manière sé lectionn é e à l'autre extrémité du compresseur (110) par l'intermédiaire d'une branche arrière de chauffage (136) et du séparateur gaz-liquide (140),
dans lequel une extrémité du premier chemin d'échange thermique (510) est connect é e ou déconnectée de manière sélective à l'autre extrémité du condenseur dans l'habitacle (120) par l'intermédiaire de la branche avant de chauffage (133), l'extrémité du premier chemin d'échange thermique (510) est connect é e ou déconnectée de manière sélectionnable à l'autre extrémité de l'échangeur de chaleur extérieur à la cabine (130) par l'intermédiaire de la branche arrière de réfrigération (132), et l'autre extrémité du premier chemin d'échange thermique (510) est connectée à l'autre extrémité du compresseur (110) par l'intermédiaire du séparateur gaz-liquide (140),
**caractérisé en ce que**
il existe une pluralité de condenseurs dans l'habitacle (120), la pluralité de condenseurs dans l'habitacle (120) comprend un premier condenseur dans l'habitacle (121) et un deuxième condenseur dans l'habitacle (122), une extrémité du premier condenseur embarqué (121) est reliée à l'extrémité du compresseur (110), l'autre extrémité du premier condenseur embarqué (121) est reliée à la branche avant de réfrigération (131), une extrémité du deuxième condenseur dans l'habitacle (122) est reliée à l'extrémité du compresseur (110) par l'intermédiaire d'une première vanne à deux voies (840), et l'autre extrémité du deuxième condenseur dans l'habitacle (122) est reliée à la branche avant de réfrigération (131).

2. Système de gestion thermique (1) selon la revendication 1, dans lequel le groupe de vannes de commande (600) comprend :
une première vanne à quatre voies (610), la première vanne à quatre voies (610) comprenant un premier orifice de vanne (611), un deuxième orifice de vanne (612), un troisième orifice de vanne (613) et un quatrième orifice de vanne (614), le premier orifice de vanne (611) étant relié à une extrémité du circuit d'eau du dissipateur thermique (300), le deuxième orifice de soupape (612) étant relié à une extrémité du circuit d'eau de la batterie (200), le troisième orifice de soupape (613) étant relié à une extrémité du circuit d'eau d'échange thermique (250), et le quatrième orifice de soupape (614) étant relié à une extrémité du circuit d'eau de l'ensemble électrique (400) ; et
une deuxième vanne à quatre voies (620), la deuxième vanne à quatre voies (620) comprenant un cinquième orifice de vanne (621), un sixième orifice de vanne (622), un septième orifice de vanne (623) et un huitième orifice de vanne (624), le cinquième orifice de vanne (621) étant relié à l'autre extrémité du circuit d'eau de l'ensemble électrique (400), le sixième orifice de soupape (622) étant relié à l'autre extrémité du circuit d'eau du dissipateur thermique (300), le septième orifice de soupape (623) étant relié à l'autre extrémité du circuit d'eau de la batterie (200), et le huitième orifice de soupape (624) étant relié à l'autre extrémité du circuit d'eau d'échange thermique (250),
dans lequel, lorsque le groupe de vannes de commande (600) est dans le premier état, le premier orifice de vanne (611) est en communication avec le quatrième orifice de vanne (614), le deuxième orifice de soupape (612) est en communication avec le troisième orifice de soupape (613), le cinquième orifice de soupape (621) est en communication avec le sixième orifice de soupape (622), et le septième orifice de soupape (623) est en communication avec le huitième orifice de soupape (624) ;
lorsque le groupe de soupapes de commande (600) est dans le deuxième état, le premier orifice de soupape (611) est en communication avec le deuxième orifice de soupape (612), le troisième orifice de soupape (613) est en communication avec le quatrième orifice de soupape (614), le cinquième orifice de soupape (621) est en communication avec le huitième orifice de soupape (624), et le sixième orifice de soupape (622) est en communication avec le septième orifice de soupape (623) ; et
lorsque le groupe de soupapes de commande (600) est dans le troisième état, le premier orifice de soupape (611) est en communication avec le deuxième orifice de soupape (612), le troisième orifice de soupape (613) est en communication avec le quatrième orifice de soupape (614), le cinquième orifice de soupape (621) est en communication avec le sixième orifice de soupape (622), et le septième orifice de soupape (623) est en communication avec le huitième orifice de soupape (624) ; ou le premier orifice de soupape (611) est en communication avec le quatrième orifice de soupape (614), le deuxième orifice de soupape (612) est en communication avec le troisième orifice de soupape (613), le cinquième orifice de soupape (621) est en communication avec le huitième orifice de soupape (624), et le sixième orifice de soupape (622) est en communication avec le septième orifice de soupape (623).

3. Système de gestion thermique (1) selon la revendication 1 ou 2, dans lequel le circuit d'eau de l'ensemble électrique (400) comprend :
un composant à commander électriquement (410) ;
un refroidisseur intermédiaire (420), le refroidisseur intermédiaire (420) étant connecté au composant commandé électriquement (410) en parallèle ; et
un moteur (430), le moteur (430) étant connecté au composant commandé électriquement (410) en série et le moteur (430) étant situé au site en aval du composant commandé électriquement (410), ou le moteur (430) étant connecté au refroidisseur intermédiaire (420) en série et le moteur (430) étant situé au site en aval du refroidisseur intermédiaire (420).

4. Système de gestion thermique (1) selon l'une quelconque des revendications 1 à 3, dans lequel le circuit d'eau du dissipateur thermique (300) comprend :
un dissipateur thermique (310) et une première branche de connexion directe (330), le dissipateur thermique (310) étant connecté à la première branche de connexion directe (330) en parallèle, et un liquide de refroidissement dans le circuit d'eau du dissipateur thermique (300) s'écoulant de manière s élective à travers le dissipateur thermique (310) ou la première branche de connexion directe (330).

5. Système de gestion thermique (1) selon l'une quelconque des revendications 1 à 4, dans lequel le circuit d'eau de batterie (200) comprend :
une batterie (210) et une deuxième branche de connexion directe (240), la batterie (210) étant connectée à l' e, la deuxième branche de connexion directe (240) en parallèle, et un liquide de refroidissement dans le circuit d'eau de la batterie (200) s'écoulant de manière sélectionnable à travers la batterie (210) ou la deuxième branche de connexion directe (240).

6. Le système de gestion thermique (1) selon la revendication 5, dans lequel le circuit d'eau de batterie (200) comprend en outre :
un dispositif de chauffage (230), le dispositif de chauffage (230) étant connecté à la batterie (210),
en particulier dans lequel le dispositif de chauffage (230) est un PTC ou un échangeur de chaleur des gaz d'échappement.

7. Système de gestion thermique (1) selon l'une quelconque des revendications 1 à 6 , dans lequel il existe une pluralité d'évaporateurs dans l'habitacle (150), la pluralité d'évaporateurs dans l'habitacle (150) comprenant un premier évaporateur dans l'habitacle (150) et un deuxième évaporateur dans l'habitacle (150), une extrémité du premier évaporateur dans l'habitacle (150) est reliée à la branche arrière de réfrigération (132) par l'intermédiaire d'un détendeur (940), l'autre extrémité du premier évaporateur dans l'habitacle (150) est reliée au séparateur gaz-liquide (140), une extrémité du deuxième évaporateur dans l'habitacle (150) est reliée à la branche arrière de réfrigération (132) par l'intermédiaire d'un autre détendeur (940), et l'autre extrémité du deuxième évaporateur dans l'habitacle (150) est reliée au séparateur gaz-liquide (140).

8. Système de gestion thermique (1) selon l'une quelconque des revendications 1 à 7, dans lequel
une deuxième vanne à deux voies (800) est disposée sur la branche avant de réfrigération (131) ;
une première soupape unidirectionnelle (900) et une troisième soupape à deux voies (820) sont disposées sur la branche arrière de réfrigération (132), la première soupape unidirectionnelle (900) permet à un réfrigérant de l'échangeur de chaleur extérieur à l'habitacle (130) de s'écouler vers l'évaporateur intérieur à l'habitacle (150), et la première soupape unidirectionnelle (900) empêche un réfrigérant de l'évaporateur intérieur à l'habitacle (150) de s'écouler vers l'échangeur de chaleur extérieur à l'habitacle (130) ;
une quatrième vanne à deux voies (810), une première vanne d'expansion électromagnétique (920) et une deuxième vanne unidirectionnelle (910) sont disposées sur la branche avant de chauffage (133), la deuxième soupape unidirectionnelle (910) permet au réfrigérant de l'évaporateur de l'habitacle (150) de s'écouler vers l'échangeur de chaleur extérieur à l'habitacle (130), et la deuxième soupape unidirectionnelle (910) empêche le réfrigérant de l'échangeur de chaleur extérieur à l'habitacle (130) de s'écouler vers l'évaporateur de l'habitacle (150) ;
une cinquième vanne à deux voies (830) est disposée sur la branche arrière de chauffage (136) ; et
l'extrémité du premier circuit d'échange thermique (510) est reliée à la branche avant de chauffage (133) et à la branche arrière de réfrigération (132) par l'intermédiaire d'un deuxième détendeur électromagnétique (930).

9. Système de gestion thermique (1) selon la revendication 8, dans lequel la branche avant de chauffage (133) comprend :
un premier segment (134), une extrémité du premier segment (134) étant reliée à l'extrémité du condenseur dans l'habitacle (120), et l'autre extrémité du premier segment (134) étant respectivement reliée à la première soupape unidirectionnelle (900), à la troisième soupape bidirectionnelle (820) et à la deuxième soupape de détente électromagnétique (930) ; et
un deuxième segment (135), une extrémité du deuxième segment (135) étant reliée à l'autre extrémité du premier segment (134), et l'autre extrémité du deuxième segment (135) étant reliée à l'autre extrémité de l'échangeur de chaleur extérieur à l'habitacle (130),
dans lequel la quatrième vanne à deux voies (810) est disposée sur le premier segment (134), et la première vanne d'expansion électromagnétique (920) et la deuxième vanne unidirectionnelle (910) sont disposées sur le deuxième segment (135).

10. Système de gestion thermique (1) selon la revendication 9, dans lequel le séparateur gaz-liquide (140) comprend :
un premier chemin d'écoulement (141), une extrémité du premier chemin (141) étant reliée à la première soupape unidirectionnelle (900) et à l'extrémité du premier segment (134), et l'autre extrémité du premier chemin d'écoulement (141) étant reliée à la troisième soupape bidirectionnelle (820), la deuxième soupape de détente électromagnétique (930) et l'extrémité du deuxième segment (135) ; et
un deuxième circuit d'écoulement (142), une extrémité du deuxième circuit d'écoulement (142) étant reliée à l'autre extrémité de l'évaporateur dans l'habitacle (150), à la branche arrière de chauffage (136) et à l'autre extrémité du premier circuit d'échange thermique (510), et l'autre extrémité du deuxième circuit d'écoulement (142) étant reliée à l'autre extrémité du compresseur (110).

11. Système de gestion thermique (1) selon l'une quelconque des revendications 1 à 10, comprenant en outre :
un circuit d'eau du moteur (700) ; et
un deuxième échangeur de chaleur (720), le deuxième échangeur de chaleur (720) comprenant un troisième circuit d'échange de chaleur (721) et un quatrième circuit d'échange de chaleur (722), le troisième circuit d'échange de chaleur (721) étant relié au circuit d'eau d'échange de chaleur (250), et le quatrième circuit d'échange de chaleur (722) étant relié au circuit d'eau du moteur (700).

12. Système de gestion thermique (1) selon la revendication 11, dans lequel le circuit d'eau du moteur (700) comprend :
un moteur (710) ; et
une sixième vanne à deux voies (850), la sixième vanne à deux voies (850) étant connectée au moteur (710) en série,
en particulier dans lequel le circuit d'eau du moteur (700) comprend :
un système d'air chaud (730), le système d'air chaud (730) étant connecté au moteur (710) en série.

13. Véhicule (2) comprenant le système de gestion thermique (1) selon l'une quelconque des revendications 1 à 12.
